# EUROPÄISCHE PATENTSCHRIFT

(11) **EP 4 345 558 B1**
(45) Veröffentlichungstag und Bekanntmachung des Hinweises auf die Patenterteilung: **20.11.2024**
(21) Anmeldenummer: 22206798.5
(22) Anmeldetag: 10.11.2022
(51) Int. Cl.: G05B 19/418

(54) **VERFAHREN ZUM BETREIBEN EINES VERBINDUNGSMODULS**
METHOD FOR OPERATING A CONNECTION MODULE
PROCÉDÉ DE FONCTIONNEMENT D'UN MODULE DE CONNEXION

(30) Priorität: 30.09.2022 EP 22199162
(43) Veröffentlichungstag der Anmeldung: 03.04.2024
(73) Patentinhaber: Murrelektronik GmbH, 71570 Oppenweiler (DE)
(72) Erfinder: Pfestorf, Sebastian, Oppenweiler 71570 (DE); Zeller, Paul, 74223 Flein (DE); Kohl, Ulrich, 71546 Aspach (DE)
(74) Vertreter: Goebel, Sebastian

(56) Entgegenhaltungen:
- WO-A1-2015/028978
- WO-A1-2022/020787
- DE-A1- 102016 120 081
- US-A1- 2019 123 524

## Beschreibung

### Technisches Gebiet

Die vorliegende Erfindung betrifft allgemein das Gebiet der Planung und Montage von Maschinen wie Automatisierungsanlagen, und insbesondere ein Betreiben eines Verbindungsmoduls bei einer computer-gestützten Installation einer solchen Maschine.

### Hintergrund

Die Komplexität und Vielfalt von Automatisierungsanlagen, die entwickelt, geplant, installiert, gewartet, und repariert werden müssen, wird immer größer. In allen Phasen des Lebenszyklus einer solchen Anlage wie der Entwicklung/Planung, Produktion, Inbetriebsetzung, Betrieb und Wartung wird eine effiziente und effektive Unterstützung für einen Installateur oder Planer durch eine umfangreiche und vor allem vollständige Dokumentation immer wichtiger. Diesem Anspruch wird die in der Praxis vorliegende Dokumentation, beispielsweise in Form von Schaltplänen, allerdings nicht immer gerecht, da durch schlecht aufeinander abgestimmte Arbeitsprozesse oder durch die Verwendung von schlecht aufeinander abgestimmten Dokumentationstools Installationsaktivitäten nicht ausreichend oder nicht vollständig eingetragen werden. Diese bekannten Umstände führen zwangsläufig zu Dokumentationslücken in der Anlagendokumentation, was eine zuverlässige Wartung oder Reparatur einer Anlage erschwert bzw. im schlimmsten Fall unmöglich macht. Es ist eine Aufgabe der vorliegenden Erfindung, Nachteile des Stands der Technik hinsichtlich der Installation von Maschinen zumindest zu reduzieren. Es ist insbesondere eine Aufgabe, die der Erfindung zugrunde liegt, ein computer-gestütztes Verfahren und ein System bereitzustellen, um eine einfachere, schnellere, sichere und fehlerfreie Installation von elektrischen Komponenten zu ermöglichen und dabei die oben genannten Nachteile des Standes der Technik zumindest teilweise zu überwinden.

DE 10 206 120081 A1 offenbart ein Verfahren zur Inbetriebnahme und Wartung einer Brandmelde- und Löschsteuerzentrale mit Funktionsmodulen, einer Anzeige und einer Steuereinheit (einschließlich verschiedener Modi für die Funktionsmodule und entsprechender LED, die die verschiedenen Modi anzeigen). WO 2022/020787 A1 offenbart eine iterativ geleitete Demontage und Montage für ein elektrisches Gerät (Schaltschrank). US 2015/028978 A1 beschreibt die Inspektion und Wartung einer elektrischen Schalttafel, die den Schritt der Erfassung eines allgemeinen Modells der Komponenten der Schalttafel während der Inspektion und die Anzeige des Modells durch ein mobiles Inspektionsgerät unter Verwendung von Augmented Reality umfasst. US 2019/123524 A1 offenbart ein System zur Rekonfiguration eines Schaltschranks, das eine Erkennungseinheit zur Erkennung von Funktionseinheiten einer elektrischen Schaltung umfasst.

### Beschreibung der Erfindung

Die voranstehende Aufgabe wird gelöst durch ein Verfahren, ein Verbindungsmodul, ein Computerprogramm sowie eine Vorrichtung zur Datenverarbeitung gemäß den unabhängigen Patentansprüchen. Weitere Merkmale und Details der Erfindung ergeben sich aus den jeweiligen Unteransprüchen, der Beschreibung und den Zeichnungen.

Gegenstand der Erfindung ist ein computerimplementiertes, Verfahren zum Betreiben eines Verbindungsmoduls bei einer computer-gestützten Installation einer Maschine.

Dabei kann das Verbindungsmodul für eine dezentrale und modulare Verbindung von Komponenten der Maschine ausgeführt sein. Für die Installation der Maschine ist es vorgesehen, dass mehrere Verbindungsmodule räumlich dezentral angeordnet werden. Somit kann das Verfahren auch zur computer-gestützten, elektrischen, Installation von mehreren räumlich dezentral angeordneten Verbindungsmodulen und/oder der damit zu verbindenden Komponenten der Maschine vorgesehen sein.

Die Maschine kann als wenigstens eine der nachfolgend genannten Maschinen ausgebildet sein:
- Eine Automatisierungsanlage,
- Eine Produktionsanlage,
- Eine Logistikanlage,
- Eine Produktionsstraße,
- Ein Bearbeitungszentrum,
- Ein Industrieroboter,
- Eine Fertigungsanlage,
- Ein Aggregat,
- Ein Elektrogerät.

Insbesondere kann die Maschine dabei als eine Maschine mit modularem Charakter oder auch als mobile oder bewegliche Maschine ausgebildet sein, bei welcher einzelne Teile der Maschine modular gemäß einer Installationsvorgabe installiert werden. Diese Installation erfolgt zumindest teilweise manuell durch einen Benutzer wie einen Werker.

Das Verbindungsmodul ist ein elektrisches Verbindungsmodul, welches es ermöglicht, dezentral die Komponenten der Maschine zu verschalten. Ferner kann das Verbindungsmodul mit einer Steuerungsvorrichtung wie einer SPS verschaltet werden, damit die Steuerungsvorrichtung im Betriebsmodus die mit dem Verbindungsmodul verbundenen Komponenten ansteuern und somit einen Betrieb der Maschine ermöglichen kann. Dabei kann die Steuerungsvorrichtung auch mit mehreren weiteren, dezentralen Verbindungsmodulen verbunden sein, um auch darüber die jeweils verbundenen Komponenten der Maschine anzusteuern. Auf diese Weise kann eine dezentrale Verschaltung der Komponenten über die Verbindungsmodule mit der Steuerungsvorrichtung bereitgestellt werden.

Ferner kann ein Verbindungsmodul vorzugsweise mehrere Anschlussstellen aufweisen, wobei an jeder der Anschlussstellen eine Komponente angeschlossen und somit mit dem Verbindungsmodul verbunden werden kann. Bspw. kann ein Verbindungsmodul mindestens zwei oder mindestens vier oder mindestens acht oder mindestens 10 Anschlussstellen aufweisen. Den Anschlussstellen kann jeweils ein Anzeigeelement zugeordnet sein. Auch ist es möglich, dass die Anschlussstellen mehrere Pins aufweisen, um elektrische Signal an die Komponente zu übertragen und/oder von der Komponente zu empfangen. Es ist möglich, dass auf diese Weise ein Betriebsstrom für die Komponente bereitgestellt und/oder ein Datenaustausch mit der Komponente durchgeführt wird. Auch ist es möglich, dass Komponenten wie Aktoren oder Sensoren selbst keine Schnittstelle zu einem Bussystem aufweisen, aber das Verbindungsmodul über das Bussystem dazu angesteuert werden kann, eine Komponente über die Anschlussstelle zu steuern und/oder auszulesen.

Die Komponenten sind vorzugsweise als elektrische Komponente ausgeführt, welche jeweils eine Aufgabe für den Betrieb der Maschine wahrnehmen können. Bspw. können die Komponenten Installationselemente umfassen, wie Kabel oder dergleichen, um einen Aktor und/oder ein Sensor und/oder ein anderes Bauteil mit dem Verbindungsmodul elektrisch zu verbinden. Ebenfalls können die Komponenten wenigstens ein Bauteil und/oder wenigstens einen Sensor und/oder wenigstens einen Aktor umfassen. Auch ein Verbindungsmodul kann als Komponente bezeichnet werden. Auch ist es denkbar, dass Verbindungsmodule miteinander verschaltet werden, bspw. in der Struktur einer Master-Slave-Verschaltung. Daher können die Komponenten auch weitere Verbindungsmodule umfassen. In diesem Fall kann z. B. von einer Modul-Modul oder Modul-Hub-Punkt-Verbindung gesprochen werden. Die Verbindungsmodule können entsprechend auch ein Hub umfassen. Auch ist es möglich, dass die Verbindungsmodule Mastermodule und Slavemodule umfassen, sodass eine Master-Slave-Verschaltung möglich sein kann. Die Verbindungsmodule können eine dezentrale und modulare Verbindung der Komponenten wie der Installationselemente ermöglichen.

Dezentral kann sich dabei darauf beziehen, dass die Verbindungsmodule zumindest teilweise einen zentralen Schaltschrank ersetzen, indem die Verbindungsmodule zwar jeweils nur einen Teil der Verbindungen für die Maschine bereitstellen, diese Verbindungen aber dezentral im Feld ermöglichen. Bei einer zentralen Topologie, also bspw. einem zentralisierten Schaltschrankkonzept, wird insbesondere von einer Punkt-zu-Punkt-Verbindung gesprochen, d.h. der Startpunkt, die Verbindung und der Endpunkt sind klar definiert. Im Gegensatz dazu ist es bei dezentralen Anwendungen möglich, bzw. kann sogar oftmals notwendig sein, zwischen dem Startpunkt und dem Endpunkt mehrere Komponenten anzuordnen oder zu verbinden.

Grundsätzlich können bei einer Maschine bspw. die folgenden Komponenten vorgesehen sein: Geräte wie Aktoren und/oder Sensoren, die Verbindungsmodule, Installationselemente, bspw. zur Verkabelung.

Das erfindungsgemäße Verfahren zum Betreiben eines Verbindungsmoduls bei einer computer-gestüzten Installation einer Maschine, wobei das Verbindungsmodul für eine dezentrale und modulare Verbindung von Komponenten der Maschine ausgeführt ist, wobei das Verbindungsmodul ein elektrisches Verbindungsmodul ist, welches es ermöglicht, dezentral die Komponente der Maschine zu verschalten, gemäß Anspruch 1 umfasst die folgenden Schritte:
- Bereitstellen einer Installationsfunktion des Verbindungsmoduls für die Installation der Maschine, vorzugsweise einzelner Komponenten, wobei die Installationsfunktion eine, vorzugsweise optische, Ausgabe einer Installationsinformation für eine Unterstützung einer Herstellung der Verbindung der Komponenten initiieren kann,
- Bereitstellen einer Betriebsfunktion des Verbindungsmoduls für einen Betrieb der installierten Maschine, wobei die Betriebsfunktion eine elektrische Ausgabe an die verbundenen Komponenten initiiert,
- Initiieren eines Installationsmodus bei dem Verbindungsmodul, wobei die Betriebsfunktion deaktiviert, und die Installationsfunktion aktiviert wird.

Im Installationsmodus können in anderen Worten automatisch die Betriebsfunktion deaktiviert und die Installationsfunktion aktiviert werden, um anstelle der elektrischen Ausgabe für den Betrieb der installierten Maschine die Unterstützung der Herstellung der Verbindung für die Installation bereitzustellen. Damit kann das Verbindungsmodul selbst dazu beitragen, einen Benutzer bei der Installation der Maschine zu unterstützen und somit die Installation vereinfachen und sicherer zu gestalten. Die Verfahrensschritte können hierzu durch das Verbindungsmodul zumindest teilweise oder vollständig selbst ausgeführt werden, z. B. durch eine Firmware des Verbindungsmoduls. Dabei kann das Initiieren des Installationsmodus (und das damit verbundene Deaktivieren bzw. Aktivieren der Funktionen) von außen ausgelöst werden, z. B. durch eine Installationsvorrichtung wie einen mobilen Computer mit einer Software zur Unterstützung und Anleitung des Benutzers bei der Installation. Das Auslösen kann z. B. durch eine Daten- und/oder elektrische Verbindung der Installationsvorrichtung mit dem Verbindungsmodul möglich sein. Das Auslösen kann dabei auch durch eine Verbindung zur Energieversorgung vorgesehen sein, sodass eine separate Datenverbindung hierzu nicht zwingend benötigt wird.

Die Installationsfunktion kann als eine Unterstützungsfunktion für die Herstellung der Verbindung und damit für die Installation vorgesehen sein. Eine weitere Unterstützungsfunktion für die Installation kann eine Prüffunktion sein, bei welcher geprüft wird, ob die Verbindung vollständig und/oder entsprechend einer Installationsvorgabe hergestellt wurde.

Bspw. ist es möglich, dass die Prüffunktion in einem Prüfmodus der Verbindungsmoduls ein Vorliegen eines Fehlers wie eines Installations- und/oder Anschlussfehlers detektiert. Hierzu können der Prüfmodus und die Prüffunktion ggf. automatisch oder manuell nach der Herstellung der Verbindung der Komponente mit dem Verbindungsmodul initiiert werden. Der Fehler kann z. B. ein Anschluss der richtigen Komponente an die falsche Anschlussstelle oder der Anschluss der falschen Komponente an die richtige Anschlussstelle sein. So ist es möglich, dass ein Benutzer die Komponente in der Form eines Aktors fälschlicherweise an eine Anschlussstelle des Verbindungsmoduls anschließt, welche fehlerhaft als ein Eingang und nicht (wie es richtig sein sollte) als ein Ausgang ausgeführt ist. Auch ist es möglich, dass ein Benutzer die Komponente in der Form eines Sensors fälschlicherweise an eine Anschlussstelle des Verbindungsmoduls anschließt, welche fehlerhaft als ein Ausgang und nicht (wie es sein sollte) als ein Eingang ausgeführt ist. Ebenfalls ist es denkbar, dass der Benutzer eine solche Komponente an eine Anschlussstelle anschließt, welche gemäß Installationsvorgabe nicht für diese Anschlussstelle vorgesehen ist. Auch ist es denkbar, dass das Anschließen mechanisch und/oder elektrisch unvollständig erfolgt. In diesen Fällen kann das Anschließen, d. h. das Verbinden der Komponente mit dem Verbindungsmodul, einen Fehler darstellen, welcher durch die Prüffunktion detektiert werden kann. Hierzu kann die Prüffunktion vorteilhafterweise über die Anschlussstelle einen Signal- und/oder Datenaustausch mit der Komponente initiieren, um zu ermittelt, welche Komponente an der Anschlussstelle angeschlossen ist. Bspw. übersendet die Komponente eine Information wie eine Bezeichnung über ihre Identität an das Verbindungsmodul. Das Verbindungsmodul kann diese Information dann ggf. an eine Installationsvorrichtung weiter übertragen, damit die Information mit der Installationsvorgabe abgeglichen wird. Falls basierend auf dem Abgleichen der Fehler detektiert wird, kann dies über die Prüffunktion durch die optische Ausgabe einem Benutzer mitgeteilt werden. Hierzu kann z. B. eine farbliche Ausgabe über wenigstens ein Anzeigeelement als optische Ausgabe vorgesehen sein, z. B. in Rot, Gelb und Grün oder weiteren Farben. Daher kann die optische Ausgabe im Prüfmodus zur Anzeige eines Ergebnisses der Detektion und somit der Prüfung dienen.

Es ist denkbar, dass der Prüfmodus automatisch nach dem Installationsmodus initiiert wird, wenn die Verbindung der Komponente mit dem Verbindungsmodul hergestellt wurde. Auf diese Weise kann nach der Herstellung der Verbindung automatisch die Prüffunktion aktiviert werden. Bspw. kann die Initiierung des Prüfmodus dadurch ausgelöst werden, dass ein Benutzer die Herstellung der Verbindung und somit die Durchführung der Installationshandlung quittiert, z. B. durch eine Benutzereingabe. Diese Benutzereingabe kann bspw. an einem Computer wie der Installationsvorrichtung und/oder durch eine Eingabevorrichtung wie ein Touchscreen und/oder ein elektronisches Kleidungsstück wie ein Handschuh erfolgen.

Auch ist es möglich, dass durch die Prüffunktion eine Abweichung von der Installationsvorgabe, insbesondere eine abweichende Verbindung einer Komponente an das Verbindungsmodul, vorzugsweise an eine abweichende Anschlussstelle, detektiert wird. Es kann dann vorgesehen sein, dass der abweichende Anschluss in der Installationsvorgabe dokumentiert und/oder das Verbindungsmodul basierend auf der detektierten Abweichung umkonfiguriert wird. Wenn z. B. der Benutzer einen Aktor fälschlicherweise an einen Eingang als Anschlussstelle angeschlossen hat, kann es sein, dass dies durch die Prüffunktion festgestellt und eine Umkonfiguration des Eingangs in einen Ausgang oder Hybridanschluss am Verbindungsmodul vorgenommen wird. In anderen Worten kann nach der Detektion der Abweichung unter Beibehaltung der physischen Verbindung softwarebasiert die Anschlussstelle umkonfiguriert werden.

Die optische Ausgabe kann im Installationsmodus zur Ausgabe der Installationsinformation dienen. Ferner kann die optische Ausgabe in einem Betriebsmodus des Verbindungsmoduls zur Bereitstellung der Betriebsfunktion dienen. Zum Beispiel kann im Betriebsmodus - also bspw. nach einer vollständigen Prüfung und Fehlerfreiheit der Maschine, die optische Ausgabe einen aktuellen Signalstatus einer zugeordneten Anschlussstelle repräsentieren. Der Signalstatus bezieht sich dabei auf einen Status der elektrischen Ausgabe, und indiziert vorzugsweise, ob die elektrische Ausgabe über die Anschlussstelle aktuell vorliegt. Der Signalstatus kann sich dabei im Betriebsmodus (insbesondere ausschließlich) über eine Steuerungsvorrichtung definieren. Auch ist es möglich, dass die Steuerungsvorrichtung in einem Fehlerfall Diagnosemeldungen vom Verbindungsmodul erhält. Um den Signalstatus zu repräsentieren, kann ein Anzeigeelement z. B. in unterschiedlichen Farben aufleuchten, z. B. in Rot, Gelb, und Grün. Im Installationsmodus kann hingegen vorgesehen sein, dass die Anschlussstelle, vorzugsweise die Pins an der Anschlussstelle, kein elektrisches Signal führen. Das jeweilige Anzeigeelement kann dann anzeigen, wo die Komponente, z. B. ein Verbindungselement wie ein Steckverbinder, angeschlossen werden soll. Vorzugsweise lässt sich dabei bereits an der optischen Ausgabe durch die Anzeigeelemente erkennen, dass sich das Verbindungsmodul im Installationsmodus befindet (z. B. durch ein Blinken oder unterschiedliche Farben).

Durch das Umschalten in einen Installationsmodus kann ferner der Vorteil erzielt werden, dass eine Verknüpfung zwischen der optischen Ausgabe und der elektrischen Ausgabe flexibel verwendet werden kann. Ebenfalls ist es möglich, dass im Installations- und/oder Prüfmodus weitere Installationsfunktionen über die optische Ausgabe bereitgestellt werden. Nachfolgend werden einige Installationsfunktionen beispielhaft genannt. So können über die optische Ausgabe freie Anschlussplätze für die Verbindung mit einer Komponente aufgezeigt werden. Auch ist es denkbar, dass die für die Verbindung verwendete Anschlussstelle daraufhin automatisch entsprechend dokumentiert wird, z. B. in der Installationsvorgabe. Zudem kann ggf. im Prüfmodus die verbundene Komponente wie ein Gerät, z. B. ein Aktor oder Sensor, automatisch erkannt werden. Basierend auf dieser Erkennung können Anschlussstellen ggf. neu vergeben und dies entsprechend dokumentiert werden, z. B. in der Installationsvorgabe. Es ist auch möglich, dass Komponenten nichts fest entsprechend der Installationsvorgabe an die dafür vorgesehene Anschlussstelle angeschlossen werden müssen, sondern bei einem davon abweichenden Anschluss dies abhängig von der Erkennung nachträglich in der Installationsvorgabe angepasst wird. Die jeweilige Installationsfunktion kann zumindest teilweise durch eine Installationsvorrichtung bereitgestellt werden, welche mit dem Verbindungsmodul in Datenverbindung steht.

Es kann im Rahmen der Erfindung vorgesehen sein, dass das Verbindungsmodul wenigstens ein Anzeigeelement aufweist, um eine Anzeige für die Betriebsfunktion bereitzustellen. Dabei kann das wenigstens eine Anzeigeelement jeweils einer Anschlussstelle des Verbindungsmoduls für die Verbindung mit einer jeweils zu verbindenden Komponente zugeordnet sein. Das Anzeigeelement ist bspw. ein elektrisches Bauelement wie eine Leuchtdiode. Ferner kann das Verfahren, insbesondere für die Herstellung der Verbindung der Komponenten im Installationsmodus, den nachfolgenden Schritt umfassen: Initiieren einer Aktivierung des Anzeigeelements durch die Installationsfunktion zur Ausgabe der Installationsinformation, um die Anschlussstelle für die jeweils zu verbindende Komponente anzuzeigen. Somit kann die Installationsinformation eine Unterstützung und/oder eine Installationsanweisung sein, um einen Benutzer darauf hinzuweisen, an welcher Anschlussstelle die zu verbindende Komponente angeschlossen werden soll.

Von weiterem Vorteil kann vorgesehen sein, dass das Initiieren der Aktivierung des Anzeigeelements auf folgende Schritte basiert, um die Ausgabe der Installationsinformation basierend auf einem empfangenen Identifikator und einer Installationsvorgabe zu initiieren:
- Bereitstellen der, insbesondere digitalen, Installationsvorgabe, welche eine Zuordnung des Verbindungsmoduls und weiteren räumlich dezentral angeordneten Verbindungsmodule der Maschine mit den Komponenten spezifiziert,
- Empfangen des, insbesondere digitalen, Identifikators der jeweils zu verbindenden Komponente, wobei die Komponente in der Form eines Installationselements, vorzugsweise eines Kabels oder eines Bauteils, oder einer sonstigen Komponente ausgeführt ist, wobei vorzugsweise der Identifikator von einer Detektionsvorrichtung empfangen wird, welche hierzu zuvor ein physisch vorliegendes Identifikationsmittel wie einen maschinenlesbaren Code eingelesen hat und den Identifikator auf Basis des eingelesenen Identifikationsmittels generiert hat,
- Identifizieren der jeweils zu verbindenden Komponente und/oder des zur Verbindung zugeordneten Verbindungsmoduls anhand der bereitgestellten Installationsvorgabe vorzugsweise durch ein Abfragen der elektrischen Komponente und/oder des Verbindungsmoduls aus der Installationsvorgabe anhand des Identifikators, bevorzugt aus einer Liste und/oder Datenbank der Installationsvorgabe.

Anschließend kann die Ausgabe der wenigstens einen Installationsinformation basierend auf dem empfangenen Identifikator und der identifizierten Komponente und/oder des identifizierten Verbindungsmoduls erfolgen, wobei vorzugsweise die Ausgabe eine visuelle und/oder akustische Ausgabe an einen Benutzer umfasst. Damit ermöglicht das Verfahren eine einfachere, schnellere und fehlerfreie Zuordnung von Verbindungsmodulen zu Komponenten und/oder umgekehrt und kann damit einen Benutzer für die Installation der Maschine wesentlich unterstützen und den Prozess vereinfachen. Ferner kann auf diese Weise ein Unterstützungssystem zur Installation, insbesondere zur Verkabelung, räumlich direkt an der identifizierten Komponente zur geführten Orientierung des Benutzers bereitgestellt werden, bei welchem eine Installationsvorrichtung die Verfahrensschritte ggf. automatisiert ausführen kann. Die Installationsvorrichtung, insbesondere eine erfindungsgemäße Vorrichtung zur Datenverarbeitung, kann dabei vorteilhafterweise mit einzelnen Verbindungsmodulen kommunizieren und damit die Ausgabe der Installationsinformation ermöglichen. Hierzu kann die Installationsvorrichtung wenigstens eine Schnittstelle für die Kommunikation aufweisen.

In einer weiteren Möglichkeit kann vorgesehen sein, dass das Verfahren ferner den nachfolgenden Schritt umfasst: Bereitstellen einer Prüffunktion zur Prüfung der Herstellung der Verbindung und/oder einer Funktion der Komponenten und/oder der Betriebsfunktion und/oder eines Verbindungszustands der Verbindung, wobei vorzugsweise die Prüffunktion die elektrische Ausgabe an die jeweils verbundene Komponente initiiert. Die Prüffunktion kann z. B. in einem Prüfmodus des Verbindungsmoduls bereitgestellt werden. Damit kann das Verbindungsmodul drei verschiedene Modi aufweisen: einen Betriebsmodus im Sinne einer Produktivphase, einen Installationsmodus im Sinne einer Installationsphase und einen Prüfmodus im Sinne einer Prüfphase oder "IO-Check Phase". Die Prüffunktion kann z. B. eine Aktivierung der Ports der Anschlussstellen auch ohne Verbindung mit einer Steuerungsvorrichtung umfassen, um eine elementare Funktionsprüfung der damit verbundenen Komponente zu ermöglichen. Es wird bspw. geprüft, ob ein Sensor am Eingang und/oder ein Aktor am Ausgang angeschlossen ist. Ein Ergebnis der Prüfung kann dabei ggf. durch die optische Ausgabe z. B. über ein Anzeigeelement ausgegeben werden. Zum Beispiel können Farben wie Rot auf einen Fehler hindeuten.

Es kann dabei auch Vorteil sein, wenn im Rahmen der Erfindung das Verfahren den folgenden weiteren Schritt umfasst: Ermitteln eines Verbindungszustands zwischen dem Verbindungsmodul und der Komponente, um festzustellen, ob die Verbindung hergestellt wurde. Hierzu kann bspw. eine elektrische Verbindungsprüfung erfolgen, durch welche automatisiert festgestellt werden kann, ob das Verbindungsmodul und die Komponente eine elektrisch leitende Verbindung aufweisen. Je nach Konstruktion ist es denkbar, dass bei der Verbindung noch nicht unmittelbar ein Stromkreis geschlossen wird, insbesondere, wenn die Installation noch nicht abgeschlossen ist. Daher können auch zusätzliche oder alternative Möglichkeiten zur Ermittlung des Verbindungszustands vorgesehen sein. So kann das Ermitteln des Verbindungszustands ferner umfassen: Empfangen einer Installationsnachricht auf Basis einer Eingabe des Benutzers und/oder von dem Verbindungsmodul. Die empfangene Installationsnachricht kann hierbei indizieren, dass die Verbindung des Verbindungsmoduls mit der Komponente, vorzugsweise mit einer angezeigten Anschlussstelle, hergestellt wurde. Entsprechend kann überprüft werden, dass diejenige Anschlussstelle, welche angezeigt wurde, auch tatsächlich mit der Komponente verbunden worden ist. Es ist möglich, dass durch das Feststellen der Herstellung der Verbindung, z. B. durch ein manuelles Quittieren eines Benutzers und/oder ein automatisches Quittieren durch ein Feststellen der Verbindung, wenn bspw. beide Seiten eines Kabels angeschlossen wurden, eine Dokumentation ausgelöst wird. Bei der Dokumentation wird bspw. eine Installationsdokumentation hinterlegt. Diese Dokumentation kann ggf. wiederholt ausgeführt werden, z. B. bei jedem Quittieren einer Tätigkeit, um damit sukzessive die Dokumentation der Installation aufzubauen. Um einerseits die Installationsinformation für den Benutzer in sichtbar zu machen und andererseits die Dokumentation der an der Komponente verrichteten Arbeiten dokumentieren zu können, ist es vorteilhaft, dass eine Installationsvorrichtung mit den Verbindungsmodulen kommunizieren kann. Im Nachgang der Installation und/oder Dokumentation kann optional auf Basis der Dokumentation die Steuerungsvorrichtung programmiert werden, und/oder die Verbindungsmodule konfiguriert werden. Aus diesem Umstand heraus kann es möglich sein, dass das Verbindungsmodul zuvor nicht weiß, welche Aufgabe sie in der zukünftigen Maschine zu erledigen hat. Dies kann auch als "unkonfiguriert" bezeichnet werden.

Ein weiterer Vorteil im Rahmen der Erfindung ist erzielbar, wenn die Betriebsfunktion die elektrische Ausgabe in der Form einer Ausgabe eines elektrischen Stroms und/oder einer elektrischen Spannung an die Komponenten initiiert. Dabei kann die elektrische Ausgabe an Anschlussstellen des Verbindungsmoduls für die Verbindung der Komponenten vorgesehen sein, um die mit den Anschlussstellen verbundenen Komponenten zu betreiben. Dies hat den Vorteil, dass das Verbindungsmodul im Betriebsmodus eine elektrische Verschaltung von Komponenten ermöglicht.

Vorteilhaft ist es zudem, wenn die Deaktivierung der Betriebsfunktion durchgeführt wird, um zu verhindern, dass die jeweils zu verbindende Komponente bei der Installation betrieben wird. Hierbei kann im Installationsmodus der elektrische Strom und/oder die elektrische Spannung an der jeweiligen Anschlussstelle zumindest reduziert werden, insbesondere derart bzw. so weit, dass der Betrieb der entsprechenden Komponente verhindert ist oder auf ein sicheres Ausmaß reduziert wird. Dies hat den Vorteil, dass während der Installation nicht unbeabsichtigt die Komponente betrieben wird. Es ist möglich, dass im Betriebsmodus auf diese Reduzierung verzichtet wird.

Ferner kann im Rahmen der Erfindung vorgesehen sein, dass nach einem Abschluss der Installation der Installationsmodus verlassen und ein Betriebsmodus für die Bereitstellung der Betriebsfunktion initiiert wird. Auf diese Weise kann die reguläre Funktion des Verbindungsmoduls bereitgestellt werden.

Vorteilhafterweise kann bei der Erfindung vorgesehen sein, dass das Verbindungsmodul wenigstens ein Anzeigeelement aufweist, um eine Anzeige für die Betriebsfunktion bereitzustellen. Das Anzeigeelement umfasst bspw. ein Leuchtmittel wie eine Leuchtdiode oder dergleichen. Auch ist es möglich, dass das Anzeigeelement genau zwei Leuchtzustände aufweist (An und Aus), wobei ein Leuchtmodus diese Leuchtzustände ggf. hinsichtlich der Frequenz und/oder Farbe anpasst. Ferner kann das Anzeigeelement an einem Gehäuse des Verbindungsmoduls derart angeordnet sein, dass das Anzeigeelement von außen durch einen Benutzer sichtbar ist. Das wenigstens eine Anzeigeelement kann wenigstens einer Anschlussstelle des Verbindungsmoduls zugeordnet sein z. B. durch eine Anordnung an dem Gehäuse benachbart zu der Anschlussstelle. Auch ist es möglich, dass im Betriebsmodus das Anzeigeelement in einem anderen Leuchtmodus wie einer anderen Farbe und/oder einer anderen Blinkfrequenz und/oder einer anderen Helligkeit als im Installationsmodus aufleuchtet. Somit kann klar der Betriebsmodus und/oder die Betriebsfunktion signalisiert und vom Installationsmodus bzw. der Installationsfunktion optisch abgegrenzt werden. Bereits im Betriebsmodus kann eine Funktion vorgesehen sein, dass eine Detektion von Fehlern wiederholt durchgeführt wird und mittels des Anzeigeelements der Fehler wie bspw. ein Kabelbruch angezeigt wird. Im Installationsmodus und/oder Prüfmodus kann diese Funktion ggf. nicht verwendet werden, sondern stattdessen das Anzeigeelement für eine andere Funktion, insbesondere für die Installation- und/oder Prüffunktion, verwendet werden.

Des Weiteren kann vorgesehen sein, dass die elektrische Ausgabe an Anschlussstellen des Verbindungsmoduls für die Verbindung der Komponenten vorgesehen ist. Hierbei kann die elektrische Ausgabe an den Anschlussstellen im Betriebsmodus durch eine Steuerungsvorrichtung außerhalb des Verbindungsmoduls, vorzugsweise eine SPS, definiert werden. Im Installationsmodus kann hingegen die elektrische Ausgabe an den Anschlussstellen durch eine Installationsvorrichtung außerhalb des Verbindungsmoduls und der Steuerungsvorrichtung definiert werden. Vorzugsweise ist eine funktionelle Verbindung zu der Steuerungsvorrichtung zur Ansteuerung der Komponenten über die Anschlussstellen im Betriebsmodus aktiv und/oder konfiguriert und im Installationsmodus inaktiv und/oder unkonfiguriert.

Auch ist es optional denkbar, dass der Installationsmodus durch wenigstens ein Anzeigeelement des Verbindungsmoduls signalisiert wird, um den Installationsmodus vom Betriebsmodus sichtbar anhand des wenigstens einen Anzeigeelements zu unterscheiden. Hierzu wird bspw. ein unterschiedlicher Leuchtmodus verwendet.

Vorteilhaft ist es zudem, wenn die Komponenten zumindest ein Verbindungselement und/oder ein Kabel und/oder ein Bauteil und/oder einen Aktor und/oder einen Sensor und/oder ein weiteres Verbindungsmodul umfassen. Bspw. können die Komponenten als Aktoren und/oder Sensoren ausgestaltet sein, welche im Betriebsmodus durch die elektrische Ausgabe betrieben werden. Der Aktor kann z. B. ein Motor oder dergleichen sein.

Es kann optional vorgesehen sein, dass ein Initiieren einer Aktivierung eines Anzeigeelements des Verbindungsmoduls durch die Installationsfunktion zur Ausgabe der Installationsinformation mit einer Ausgabe einer weiteren Installationsinformation in der Form einer Installationsanweisung zur Unterstützung eines Benutzers bei der Installation synchronisiert ist und/oder wird. Dabei kann die Ausgabe der weiteren Installationsinformationen zumindest einen der nachfolgenden Schritte umfassen:
- Initiieren einer Anzeige einer Anschlussstelle, insbesondere eines Steckplatzes, der elektrischen Komponente für das Installationselement auf einer Benutzeroberfläche eines Computers, wobei die Benutzeroberfläche einen digitalen Zwilling zumindest eines Teils der Maschine visualisiert, und vorzugsweise einen mechanischen und/oder einen elektrischen Aufbau des Teils der Maschine visualisiert,
- Initiieren einer Anzeige einer Anschlussstelle, insbesondere eines Steckplatzes, der elektrischen Komponente für das Installationselement mittels Erweiterter Realität und/oder mittels eines Kleidungsstücks wie eines Handschuhs und/oder mittels einer Detektionsvorrichtung und/oder durch ein optisches und/oder akustisches Signal,
- Initiieren einer Ausgabe der Installationsanweisung als eine Anweisung für den Benutzer, das Installationselement an eine bestimmte Anschlussstelle der elektrischen Komponente anzuschließen, wobei vorzugsweise die Anschlussstelle anhand der Installationsvorgabe ermittelt wird,
- Initiieren einer akustischen Ausgabe, insbesondere einer Sprachausgabe, der Installationsanweisung.

Dies ermöglicht eine unmittelbare Information des Benutzers durch die Installationsanweisung, in welcher Weise die Komponente angeschlossen, d. h. mit dem Verbindungsmodul verbunden, werden soll. Bspw. kann durch ein Aufleuchten des Anzeigeelements die Anschlussstelle angezeigt werden, an welcher die Komponente angeschlossen werden soll. Ferner kann es das Aufleuchten des Anzeigeelements ermöglichen, eine richtig oder falsch zugeordnete Anschlussstelle entsprechend anzuzeigen.

Hierzu kann das Verbindungsmodul mehrere der Anzeigeelemente aufweisen, welche entsprechenden Anschlussstellen zugeordnet sind, z. B. durch eine benachbarte Anordnung an einem Anschlusselement.

Es ist denkbar, dass die Installationsinformation durch ein optisches und/oder akustisches und/oder mechanisches Signal und/oder durch eine Vibration ausgegeben wird. Bspw. kann es vorgesehen sein, dass im Installationsmodus und/oder im Prüfmodus durch die Installations- und/oder Prüffunktion festgestellt wird, dass eine Komponente an der falschen Anschlussstelle angeschlossen wird. Dies kann ggf. durch die Installationsinformation signalisiert werden. In gleicher Weise kann alternativ oder zusätzlich ein korrekter Anschluss signalisiert werden. Die Installationsinformation kann z. B. eine binäre Information sein (z. B. richtiger Anschluss oder falscher Anschluss). Auch kann die Installationsinformation ggf. weitergehende Informationen umfassen, z. B. einen Hinweis, welche Anschlussstelle gemäß der Installationsvorgabe die richtige wäre. Hierzu kann bspw. auch eine Textinformation und/oder eine Grafik ausgegeben werden. Die Installationsinformation kann entsprechend auch auf einem Bildschirm dargestellt werden. Weiter ist es denkbar, dass die Installationsinformation über eine Vibration oder dergleichen ausgegeben wird, z. B. über ein Kleidungsstück wie einen Handschuh des Benutzers. Besonders vorteilhaft ist es, wenn in dieses Kleidungsstück die Detektionsvorrichtung integriert wird, um einen Identifikator darüber einzuscannen.

Ebenfalls Gegenstand der Erfindung ist ein Verbindungsmodul für eine dezentrale und modulare Verbindung von Komponenten einer Maschine, wobei das Verbindungsmodul zur Ausführung der Schritte eines erfindungsgemäßen Verfahrens ausgebildet ist. Damit bringt das erfindungsgemäße Verbindungsmodul die gleichen Vorteile mit sich, wie sie ausführlich mit Bezug auf ein erfindungsgemäßes Verfahren beschrieben worden sind.

Ein Benutzer kann bspw. ein Installateur und/oder Anlagenmechaniker und/oder Elektriker und/oder Werker und/oder Planer und/oder mechanischer Konstrukteur oder Entwickler und/oder elektrischer Konstrukteur oder Entwickler und/oder SPS-Programmierer und/oder Inbetriebnehmer und/oder Instandhalter und/oder Maschinenführer sein. Es ist möglich, dass der Benutzer das erfindungsgemäße Verfahren dadurch verwendet, dass das Verfahren über einen Computer für den Benutzer bereitgestellt wird. Hierzu kann ein Computerprogramm zumindest teilweise durch den Computer und/oder durch das Verbindungsmodul und/oder einen weiteren Computer ausgeführt werden, um die erfindungsgemäßen Verfahrensschritte durchzuführen.

Ferner ist es möglich, dass mehrere Benutzer simultan oder zumindest teilweise gleichzeitig das erfindungsgemäße Verfahren anwenden. Entsprechend können die Schritte eines erfindungsgemäßen Verfahrens auch mehrfach und/oder zumindest teilweise zeitlich parallel durchgeführt werden, vorzugsweise für unterschiedliche Verbindungsmodule. Bspw. werden für mindestens zwei oder mindestens drei oder mindestens vier Benutzer jeweils die Schritte zumindest teilweise gleichzeitig ausgeführt.

Für die Installation der Maschine können mehrere Komponenten wie Installationselemente vorgesehen sein. Diesen Komponenten kann jeweils ein Identifikator zugeordnet sein, durch welchen die Komponenten eindeutig identifiziert werden können. Der Identifikator kann eine Information sein, welche bspw. digital verarbeitet werden kann. Die jeweilige Komponente kann den Identifikator dadurch aufweisen, dass ein physisches Identifikationsmittel an der Komponente vorgesehen und/oder angebracht ist. Die Komponenten können bspw. Kabel oder Bauteile sein, welche ein funktionaler Teil der Maschine sind. Der Identifikator umfasst vorteilhafterweise eine eindeutige und insbesondere eineindeutige Kennung. Damit ist es möglich, die Komponente anhand des Identifikators eindeutig im Zusammenhang mit der Maschine und/oder auch weiteren Maschinen und/oder der Installation der Maschine zu identifizieren. Dem Identifikator können eine oder mehrere Informationen über die Komponente zugewiesen werden. Die wenigstens eine Information kann wenigstens eine der nachfolgenden Informationen umfassen: wenigstens eine Zustandsinformation, die ausgegebene Installationsinformation, eine Kennung des identifizierten Verbindungsmoduls, wenigstens eine der nachfolgend noch näher beschriebenen Dokumentationsspezifikationen wie Bauteiltyp, Maschinentyp, Anlagentyp, Benutzer, Anschlussstellenbezeichnung, Zeitstempel Datum und Uhrzeit, Installationsdauer, Adresse in einem Bussystem, Betriebsmittelkennzeichnung, Kabellänge, Portbelegung, Eigenschaften des offenen Kabels, Temperatur, Luftfeuchtigkeit, aktueller Projektstand bei der Montage, Planabweichung und Grund. Eine digitale Hinterlegung der wenigstens einen Information zugeordnet zu dem Identifikator ermöglicht es somit, einen digitalen Zwilling der Komponente zu schaffen. Auf diese Weise kann eine passive Smartifizierung der Komponente ermöglicht werden.

Unter einer Smartifizierung versteht man insbesondere eine Erweiterung eines Industrieprodukts wie beispielsweise eine Komponente und/oder ein Bauteil und/oder ein Installationselement, wie z.B. ein Kabel, um intelligente Eigenschaften. Mit Hilfe von Informationstechnologien kann es ermöglicht werden, dass Verbindungsmodule Daten verarbeiten und zusätzliche Mehrwerte bieten können. Eine passive Smartifizierung kann als eine entsprechende Vorstufe mittels einem passiven intelligenten Bauelement wie beispielsweise einem NFC-Chip (dt. Nahfeldkommunikation, abgekürzt NFC) und/oder einem maschinenlesbaren Code vorgesehen sein. So kann eine Grundlage für eine automatisierte Erfassung oder für Änderungen und deren Auswirkungen auf die Funktion einer Maschine geschaffen werden. Die eindeutige, vorzugsweise eineindeutige Kennzeichnung in Verbindung mit dem Zugriff auf eine externe Datenbank kann das aktive Anreichern von Informationen und somit eine passive Smartifizierung ermöglichen.

Insbesondere werden über die Installationselemente Geräte der Maschine wie Aktoren und/oder Sensoren betrieben, also vorzugsweise angesteuert und/oder ausgelesen. Für den Betrieb der Geräte kann eine Steuerungsvorrichtung wie eine SPS (Speicherprogrammierbare Steuerung) vorgesehen sein, welche über die Installationselemente und Verbindungsmodulen den elektrischen Betrieb der Geräte durchführen kann. Hierzu kann die Steuerungsvorrichtung mit den Verbindungsmodulen in elektrischer Verbindung stehen.

Vorzugsweise kann das Installationselement ein Kabel und/oder ein Bauteil umfassen, wobei das Kabel mindestens oder genau einen Steckverbinder aufweisen kann, und bevorzugt einseitig konfektioniert sein kann, d.h. einseitig einen weiblichen oder männlichen Stecker und an der anderen Seite ein offenes Ende aufweist. Alternativ kann das Kabel auch zweiseitig konfektioniert sein, d.h. an jeder Seite weist das Kabel einen weiblichen oder männlichen Stecker auf.

Es kann ferner möglich sein, dass die wenigstens eine Installationsinformation eine Installationsanweisung zur Unterstützung eines Benutzers wie einen Werker und/oder Installateur bei der Installation umfasst. Die Installationsanweisung kann dabei auch eine Anleitung für die Installation umfassen, bspw. eine Schritt-für-Schritt-Anleitung.

Die Anschlussstelle, insbesondere ein Anschlussport, welche gemäß der Installationsvorgabe für den Anschluss der Komponente mit dem empfangenen Identifikator vorgesehen sein kann, kann bspw. über den empfangenen Identifikator aus der Installationsvorgabe abgefragt werden. Hierzu kann die Installationsvorgabe eine elektronische Abfrage ermöglichen, z. B. mittels einer Datenbank und/oder eine Liste und/oder dergleichen.

Die Anzeige der Anschlussstelle auf der Benutzeroberfläche kann bspw. eine grafische Darstellung der Anschlussstellen der Komponente umfassen, wobei die Anschlussstelle, welche für den Anschluss der Komponente mit dem empfangenen Identifikator vorgesehen ist, grafisch hervorgehoben wird.

Die Benutzeroberfläche kann eine grafische Benutzeroberfläche sein, welche auf einem Bildschirm vorzugsweise einer Installationsvorrichtung wie eines Computers dargestellt wird. Der Computer kann bspw. ein tragbarer Computer wie ein Laptop oder Tablet sein.

Die Anzeige mittels Erweiterter Realität (engl. Augmented Reality) kann bspw. dadurch erfolgen, dass eine VR (Virtual Reality) Brille durch einen Benutzer verwendet wird, um zusätzliche Informationen anzuzeigen, und/oder dass die Umgebung des Benutzers durch eine Kamera aufzeichnet und das Kamerabild verarbeitet wird, um zusätzliche Informationen in das Kamerabild einzubringen. Die zusätzlichen Informationen umfassen z. B. die Hervorhebung der Anschlussstelle, wenn in dem Kamerabild die physische Anschlussstelle des Verbindungsmoduls zu sehen ist.

Ferner kann auch eine akustische Ausgabe vorgesehen sein, welche z. B. eine Ansteuerung eines Lautsprechers umfasst. Die akustische Ausgabe kann bspw. eine Sprachausgabe sein, durch welche die Anschlussbezeichnung der Anschlussstelle gesprochen wird.

Ein weiterer Vorteil im Rahmen der Erfindung ist erzielbar, wenn das Verfahren die folgenden weiteren Schritte umfasst:
- Verifizieren der Verbindung, vorzugsweise der verbundenen Anschlussstelle, anhand der Installationsvorgabe, vorzugsweise eines vorgegebenen, digitalen Schalt- und insbesondere Elektro-Anschlussplans, insbesondere, um festzustellen, ob ein Benutzer die Installationsinformation in der Form einer Installationsanweisung korrekt umgesetzt hat, wobei bevorzugt in Abhängigkeit von dem Verifizieren eine Kennzeichnung für die Installationsvorgabe hinterlegt wird, und besonders bevorzugt im Falle einer positiven Verifikation der nachfolgende Schritt durchgeführt wird:
- Hinterlegen der Kennzeichnung der Anschlussstelle als korrekt verbundene Anschlussstelle in der Installationsvorgabe.

Vorteilhafterweise kann auf Basis der Ermittlung des Verbindungszustands die Verifizierung durchgeführt werden. Die Verifizierung ermöglicht damit die Beurteilung, ob der Benutzer der Installationsanweisung richtig gefolgt ist. Das Ergebnis der Verifikation kann genutzt werden, um die Kennzeichnung in der Installationsvorgabe zu hinterlegen. Somit kann die Installationsvorgabe zu einem späteren Zeitpunkt genutzt werden, um zu überprüfen, ob der Installationsvorgabe gefolgt wurde und/oder in welchem Umfang von der Installationsvorgabe bei der Installation abgewichen worden ist.

Sollte ein Benutzer von der Installationsanweisung abweichen, geschieht dies häufig aus einem relevanten Grund oder Anlass. Daher kann einem Benutzer die Möglichkeit bereitgestellt werden, bspw. über die Benutzeroberfläche und/oder eine Eingabevorrichtung wie eine Spracheingabe und/oder eine Tastatur und/oder eine Maus und/oder ein elektronisches Kleidungsstück und/oder ein Touchscreen, einen Installationsparameter einzugeben. Vorteilhafterweise kann im Falle einer negativen Verifikation, wenn der Benutzer die Installationsanweisung also nicht korrekt umgesetzt hat, zumindest einer der nachfolgenden Schritte durchgeführt werden: Hinterlegen einer Kennzeichnung der Anschlussstelle als geänderte verbundene Anschlussstelle in der Installationsvorgabe, bevorzugt basierend auf einem vom Benutzer erfassten Installationsparameter, insbesondere einem Anlass oder Grund der Änderung, wobei vorzugsweise eine Angabe zum Anlass oder Grund der Änderung mit hinterlegt wird, und bevorzugt: Initiieren einer Korrektur der Verbindung gemäß der Installationsvorgabe. Die Korrektur kann bspw. dann eine Anpassung der Installationsvorgabe umfassen, wenn die neue Verbindung begründet ist und somit zur gewünschten Installation vorteilhaft beiträgt.

Optional kann weiter vorgesehen sein, dass das Verfahren den nachfolgenden weiteren Schritt umfasst, wobei der Schritt vorzugsweise bei dem Verifizieren der Verbindung durchgeführt wird:
- Validieren der, insbesondere verifizierten, Verbindung hinsichtlich einer vollständigen Herstellung der Verbindung, insbesondere einer ordnungsgemäßen Verschraubung und/oder Strom- und/oder Datenverbindung und/oder Kontaktierung, bevorzugt mittels einer von einem externen Prüfmittel, insbesondere einem Sensor oder einem Prüfwerkzeug, übermittelten Messgröße, um festzustellen, ob ein Benutzer eine vorgegebene Messgröße eingehalten hat.

Dies ermöglicht es, dass vorteilhafterweise abhängig von einer Installationsumgebung die jeweils gültigen oder erforderlichen Anforderungen an verwendete Materialien oder die Verbindung gewährleistet werden. Ferner hat dies den Vorteil, dass Sicherheitsrisiken bei der durchgeführten Installation von Maschinen deutlich gemindert werden. Die vorgegebene Messgröße kann dabei ein Referenzwert sein, welcher mit der übermittelten Messgröße als aktueller Messwert verglichen wird. Die Herstellung der Verbindung kann bspw. dann als ordnungsgemäß und/oder vollständig gelten, wenn die übermittelte Messgröße eine vordefinierte Bedingung wie einem Überschreiten des Referenzwertes erfüllt.

Des Weiteren kann vorgesehen sein, dass die wenigstens eine Installationsinformation eine Installationsanweisung zur Unterstützung eines Benutzers bei einem Wiederaufbau der Maschine umfasst, wobei vorzugsweise das Initiieren der Ausgabe zumindest den nachfolgenden Schritt umfasst: Initiieren einer Ausgabe einer Installationsreihenfolge mittels der wenigstens einen Installationsinformation für die Installation der Maschine. Die Installationsinformation kann z. B. eine Installationsanleitung umfassen, welche auch eine Reihenfolge der Installation angibt. Dies vereinfacht die Installation für einen Benutzer sowie beschleunigt die Installation, da eine aufwendige Interpretation eines Schalt- und insbesondere Anschlussplans zumindest teilweise nicht mehr erforderlich ist.

Gemäß einer vorteilhaften Weiterbildung der Erfindung kann vorgesehen sein, dass das Initiieren der Ausgabe eine Initiierung einer bidirektionalen Kommunikation mit dem identifizierten Verbindungsmodul über ein Bussystem umfasst. Die Ausgabe kann z. B. dadurch getriggert werden, dass eine bestimmte Nachricht, vorzugsweise ein Befehl, über die Kommunikation an das Verbindungsmodul übertragen wird. Hierzu kann bspw. ein Computerprogramm durch eine Datenverarbeitungsvorrichtung ausgeführt werden, wobei die Datenverarbeitungsvorrichtung mit dem Bussystem verbunden ist.

Vorteilhafterweise kann bei der Erfindung vorgesehen sein, dass wenigstens eine der nachfolgenden Spezifikationen empfangen wird, vorzugsweise durch die Installationsnachricht, um basierend auf dem empfangenen Identifikator und dem identifizierten Verbindungsmodul einen digitalen Zwilling des Verbindungsmoduls und/oder der elektrischen Komponente zu erstellen: Bauteiltyp, Maschinentyp, Anlagentyp, Benutzer, Anschlussstellenbezeichnung, Zeitstempel Datum und Uhrzeit, Installationsdauer, Adresse in einem Bussystem, Betriebsmittelkennzeichnung, Kabellänge, Portbelegung, Eigenschaften des offenen Kabels, Temperatur, Luftfeuchtigkeit, aktueller Projektstand bei der Montage, Planabweichung und Grund. Die wenigstens eine Spezifikation kann im Rahmen dieser Erfindung auch als Dokumentationsspezifikation bezeichnet werden.

Die Installationsnachricht kann z. B. auf Basis einer Eingabe eines Benutzers erzeugt worden sein, wobei der Benutzer in der Eingabe die wenigstens eine Spezifikation angegeben haben kann. Auch ist es möglich, dass die Spezifikation automatisiert ermittelt wird, z. B. durch die Komponente und/oder eine Datenverarbeitungsvorrichtung, insbesondere anhand des empfangenen Identifikators. Hierzu kann bspw. die wenigstens eine Spezifikation in der Komponente und/oder in dem Installationselement und/oder in dem Verbindungsmodul hinterlegt sein.

In einer weiteren Möglichkeit kann vorgesehen sein, dass die Installationsinformation eine Installationskonfiguration und/oder eine Installationsdokumentation umfasst, vorzugsweise für eine Demontage und/oder einen Wiederaufbau der Maschine, welche zur Dokumentation hinterlegt, vorzugsweise in einem Datenspeicher hinterlegt und/oder an die elektrische Komponente übertragen wird. Der Datenspeicher kann dabei als nicht-flüchtiger Datenspeicher ausgeführt sein, um eine spätere Auswertung der Installationskonfiguration und/oder der Installationsdokumentation zuverlässig zu ermöglichen. Dabei kann die Installationskonfiguration und/oder die Installationsdokumentation bspw. die hinterlegte Kennzeichnung basierend auf der Verifikation umfassen.

Ein weiterer Vorteil kann im Rahmen der Erfindung erzielt werden, wenn die Installationsinformation eine eindeutige Kennung umfasst, welche die Komponente und/oder das Installationselement und/oder das identifizierte Verbindungsmodul kennzeichnet, wobei die Installationsinformation in der Installationsvorgabe, insbesondere in einem digitalisierten Bauplan, vorzugsweise umfassend ECAD- und/oder MCAD-Daten, hinterlegt wird, und/oder wobei anhand des Identifikators die Komponente aus einer Mehrzahl gleichartiger Komponenten ausgewählt wird und/oder das identifizierte Verbindungsmodul aus einer Mehrzahl gleichartiger Verbindungsmodule ausgewählt wird. Die Installationsvorgabe ermöglicht es damit, anhand der Kennung und/oder des Identifikators die Zuordnung der Verbindungsmodule mit den Komponenten abzufragen. Hierzu kann die Installationsvorgabe eine Verknüpfung der Kennungen untereinander und/oder mit den Identifikatoren umfassen. Der Identifikator kann optional eindeutig einer der Kennungen der Komponenten zugeordnet sein und/oder der Identifikator kann dieser Kennung entsprechen.

Ein weiterer Vorteil im Rahmen der Erfindung ist erzielbar, wenn die Installationsvorgabe eine vordefinierte Spezifikation über einen modularen und/oder dezentralen Aufbau der Maschine, insbesondere der Anlage, vorzugsweise basierend auf vorgegebenen ECAD- und/oder MCAD-Daten, umfasst, insbesondere über eine Verschaltung der Komponenten wie Installationselemente in der Form von Kabeln und/oder Bauteilen mittels der Verbindungsmodule, vorzugsweise umfassend einen Elektro-Anschlussplan, wobei bevorzugt die Installationsvorgabe durch eine Verknüpfung der ECAD- und MCAD-Daten bestimmt wird. Damit kann die Installationsvorgabe einen digitalen Schaltplan und/oder Bauplan und/oder Installationsplan der Maschine umfassen.

Zudem ist im Rahmen der Erfindung denkbar, dass anhand des Identifikators eine Konfiguration des Verbindungsmoduls durchgeführt wird, um die Verbindungsmodule von einem basiskonfigurierten Zustand, in welchem die Komponente vorzugsweise zur bidirektionalen Kommunikation mittels eines Bussystems konfiguriert ist und/oder eine funktionelle Ansteuerung durch eine Steuerungsvorrichtung, vorzugsweise eine SPS, ausgenommen ist, in einen Zustand mit erweiterter Konfiguration zur funktionellen Ansteuerung durch die Steuerungsvorrichtung überführt wird.

Der empfangene Identifikator ermöglicht es insbesondere, zu erkennen, welches Installationselement mit dem Verbindungsmodul verbunden wurde (oder verbunden werden soll). Diese Erkennung kann genutzt werden, um eine für die Installation notwendige Konfiguration der Verbindungsmodule automatisiert durchzuführen, was den Konfigurationsaufwand an einem Verbindungsmodul während der Installation deutlich reduziert. Bspw. wird anhand des empfangenen Identifikators und anhand der Installationsvorgabe bestimmt, welche der Verbindungsmodule mit dem Installationselement verbunden ist (oder wird). Entsprechend kann das Verbindungsmodul für dieses Installationselement konfiguriert werden, sodass für die spätere funktionale Ansteuerung durch die Steuerungsvorrichtung der Steuerungsvorrichtung bekannt ist, dass das Installationselement mit diesem Verbindungsmodul verbunden ist. Dies ermöglicht es der Steuerungsvorrichtung z. B., über diese Verbindungsmodul und/oder das Installationselement wenigstens ein Gerät der Maschine wie einen Aktor und/oder Sensor zu betreiben.

Ebenfalls Gegenstand der Erfindung kann ein System für eine computer-gestützte Installation von räumlich dezentral angeordneten elektrischen Komponenten einer Maschine sein, umfassend eine Detektionsvorrichtung, insbesondere einen Scanner wie ein Handscanner oder eine Kamera, für eine Bereitstellung eines Identifikators eines Installationselements, vorzugsweise eines Kabels oder eines Bauteils, ferner umfassend wenigstens eine elektrische Komponente, vorzugsweise in der Form eines Verbindungsmoduls zur Verbindung mit dem Installationselement und weiteren Installationselementen, und eine Vorrichtung zur Datenverarbeitung, umfassend Mittel zur Ausführung der Schritte eines erfindungsgemäßen Verfahrens. Damit bringt das erfindungsgemäße System die gleichen Vorteile mit sich, wie sie ausführlich mit Bezug auf ein erfindungsgemäßes Verfahren beschrieben worden sind.

Zudem kann eine Vorrichtung zur Datenverarbeitung, vorzugsweise für das Verbindungsmodul, umfassend Mittel zur Ausführung der Schritte eines erfindungsgemäßen Verfahrens, ebenfalls Gegenstand der Erfindung sein. Die Vorrichtung kann dazu angepasst sein, mit den Komponenten, insbesondere Modulen der Maschine, insbesondere Anlage, zu kommunizieren, vorzugsweise ohne dass die Module vorkonfiguriert sind und/oder an eine Steuerungsvorrichtung angeschlossen sind.

Des Weiteren kann vorgesehen sein, dass der Identifikator in einem dem Installationselement zugeordneten, insbesondere an diesem angeordneten, maschinenlesbaren Code kodiert ist, wobei der maschinenlesbare Code mittels der Detektionsvorrichtung maschinenlesbar ist.

Darüber hinaus ist es möglich, dass das Verbindungsmodul und/oder die Komponenten und ein Computer und/oder eine Steuerungsvorrichtung über ein Bussystem jeweils zur bidirektionalen Kommunikation miteinander verbunden sind, wobei die bidirektionale Kommunikation auf Basis eines Kommunikationsprotokolls für ein Feldbussystem vorgesehen ist, insbesondere auf Basis eines ProfiNet-, Ethernet/IP-, EtherCAT oder 802.3-Standards, und/oder die bidirektionale Kommunikation kabelgebunden über ein Bussystem oder kabellos mittels Bluetooth oder WLAN, auf Basis eines Standards gemäß IEEE 802.11 oder auf Basis eines Mobilfunk-Telekommunikationsstandards vorgesehen ist.

Ebenfalls Gegenstand der Erfindung ist ein Computerprogramm, umfassend Befehle, die bei der Ausführung des Programms durch einen Computer, wie die erfindungsgemäße Vorrichtung zur Datenverarbeitung, vorzugsweise des Verbindungsmoduls, diesen veranlassen, die Schritte eines erfindungsgemäßen Verfahrens auszuführen. Damit bringt das erfindungsgemäße Computerprogramm die gleichen Vorteile mit sich, wie sie ausführlich mit Bezug auf ein erfindungsgemäßes Verfahren beschrieben worden sind. Das Computerprogramm kann als eine Firmware des Verbindungsmoduls ausgeführt sein.

Es kann vorgesehen sein, dass mehrere Benutzer die (gleichen) Verfahrensschritte simultan und/oder zumindest teilweise gleichzeitig durchführen. Die simultane und/oder zumindest teilweise gleichzeitige Ausführung von (gleichen) Verfahrensschritten durch mehrere Benutzer wird nachfolgend auch als Mehrbenutzeranwendung bezeichnet.

Ebenfalls kann ein weiteres Verfahren für eine computer-gestützte Installation von räumlich dezentral angeordneten elektrischen Komponenten wie Verbindungsmodulen einer Maschine Gegenstand der Erfindung sein, bei welchem die Installation von mindestens zwei Benutzern simultan und/oder zumindest teilweise gleichzeitig durchgeführt wird.

Im Zusammenhang mit einem erfindungsgemäßen Verfahren, insbesondere bei einer Mehrbenutzeranwendung und/oder bei dem weiteren Verfahren, kann eine Übergabe zwischen den unterschiedlichen Benutzern vorgesehen sein. Um eine Übergabe zwischen den, vorzugsweise beiden, Benutzern zu ermöglichen und einen optimalen Prozess zu gewährleisten, kann ein Bearbeitungsstand des jeweiligen Benutzers automatisch und in Echtzeit digital dokumentiert werden. So können die beiden oder auch mehrere Benutzer gleichzeitig an verschiedenen Bereichen der Maschine arbeiten, ohne die Integrität der elektrischen Installation zu gefährden oder langwierige Abstimmungsprozesse durchführen zu müssen.

Vorteilhafterweise ist vorgesehen, dass eine Anzeige des jeweils aktuellen Stands der Installation in Echtzeit durchgeführt wird. Ferner kann eine Installationsanweisung dem jeweiligen Benutzer zugeordnet und digital dokumentiert werden. Auf diese Weise können während des Installationsprozesses relevante Informationen gesammelt werden. Zu den erfassten Informationen zählen beispielsweise:
▪ Eine benutzerspezifische Kennung und Rolle (Zugriffs- und Bearbeitungsberechtigungen, ggf. Qualifikationslevel), und/oder
▪ Ein zuletzt verwendetes Verbindungselement und/oder eine zuletzt verwendete Komponente und/oder ein zuletzt verwendets Bauteil, und/oder
▪ Eine zuletzt bearbeitete Stelle, insbesondere Segment, der Maschine, an der das zuletzt verwendete Verbindungsmodul und/oder Bauteil und/oder die zuletzt verwendete Komponente angebracht wurde, und/oder
▪ Ein letzter Benutzer (eindeutige Benutzerkennung) sowie Zeitpunkt der letzten Bearbeitung des Benutzers, und/oder;
▪ Ein zuletzt identifiziertes Verbindungselement, vorzugsweise gescanntes Bauteil, und ein Maschinenbereich, für den das Verbindungselement bzw. Bauteil vorgesehen ist.

Es kann vorgesehen sein, dass mindestens zwei Benutzer die Installation von räumlich dezentral angeordneten, elektrischen Komponenten, vorzugsweise Verbindungsmodulen, einer Maschine durchführen. Jeder Benutzer kann sich dabei über die Benutzeroberfläche eines Computers, vorzugsweise eines tragbaren Computers, anmelden und daraufhin beispielsweise einen zu bearbeitenden Arbeitsauftrag auswählen, um mit der Installation zur beginnen. Die Auswahl eines Arbeitsauftrags oder einer Installationsanweisung sperrt diese für die anderen Benutzer. Jeder der Benutzer kann dabei an einem eigenen Computer die Anmeldung und Auswahl durchführen. Dabei sind die Computer z. B. über ein Netzwerk miteinander und/oder mit einem Server verbunden, um die Auswahl miteinander zu synchronisieren.

### Kurzbeschreibung der Zeichnungen

Zum besseren Verständnis der Offenbarung wird auf die folgenden Zeichnungen verwiesen:
- Fig. 1:: Eine zentrale Verschaltung bei einer Maschine mittels eines Schaltschranks.
- Fig. 2:: Eine dezentrale Verschaltung gemäß Ausführungsbeispielen der Erfindung.
- Fig. 3: Eine schematische Darstellung von Teilen eines Systems gemäß Ausführungsbeispielen der Erfindung.
- Fig. 4: Eine schematische Darstellung von Einzelheiten eines Verfahrens gemäß Ausführungsbeispielen der Erfindung.
- Fig. 5: Eine schematische Darstellung von Schritten eines Verfahrens gemäß Ausführungsbeispielen der Erfindung.

### Beschreibung der Ausführungsbeispiele

Das Planen, Installieren und Einrichten von Maschinen sowie elektronischer Automatisierungstechnik ist eine komplexe Aufgabe. Dies gilt für zentralisierte Schaltschrank-Systeme ebenso, wie für dezentralisierte Systeme, in denen Steuerungsmodule direkt an den Anlagen angebracht werden. Die entsprechenden Prozesse werden von unterschiedlichen Personen, wie Anlagen-Planer, Elektro-Planer, Installateur, Anlagenprogrammierer etc. durchgeführt. Eine Besonderheit bei dezentralen Systemen ist die Verteilung der Module an verschiedenen Stellen einer Maschine im Vergleich zu den zentralisierten Schaltschrank-Systemen. Gerade bei größeren Maschinen kann eine simultane, das heißt zeitgleich parallel durch mehrere Benutzer ausgeführte Installation aus zeitlichen und logistischen Gründen vorteilhaft sein. Um einen reibungslosen Installationsprozess zu ermöglichen, soll der Arbeitsstand automatisch, benutzerindividuell und in Echtzeit digital dokumentiert werden. Über den ganzen Anlagen-Lebenszyklus ist es aus unterschiedlichen Gründen (wie z.B. Wartungsplanung, Systemdiagnosen) wichtig, über eine vollständige Dokumentation aller relevanten Informationen zu verfügen.

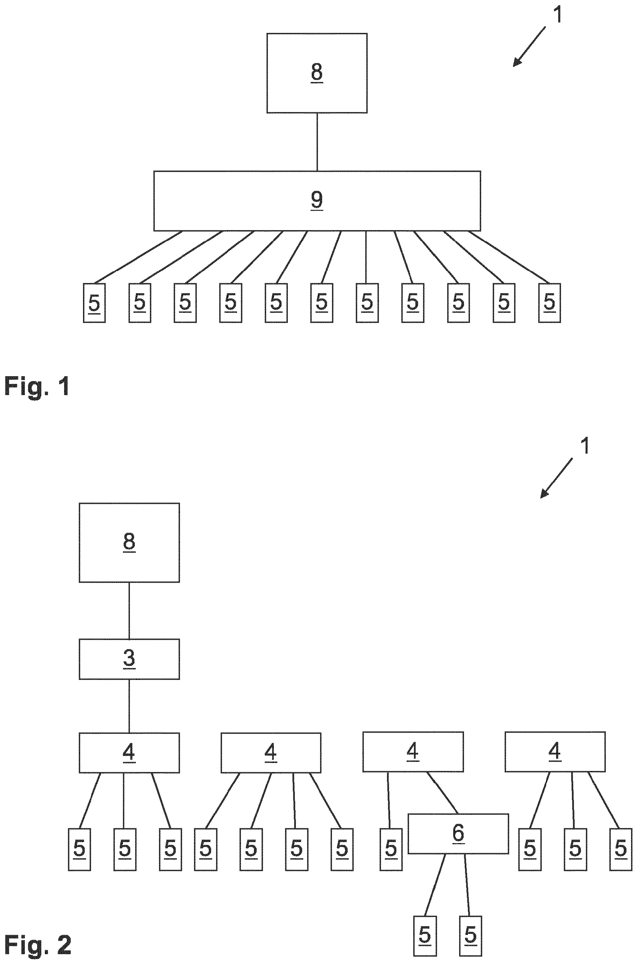

In Fig. 1 ist schematisch eine zentrale Verschaltung mittels eines Schaltschranks 9 dargestellt, um diese einer dezentralen Verschaltung mittels räumlich dezentral angeordneten, elektrischen Verbindungsmodulen 4 einer Maschine 1 in Fig. 2 gegenüberzustellen. Anstelle einer Verbindung sämtlicher Geräte 5 wie Sensoren und Aktoren unmittelbar mit dem Schaltschrank 9 wie in Fig. 1 dargestellt, können bei der dezentralen Verschaltung in Fig. 2 mehrere Verbindungsmodule 4 eingesetzt werden. Diese ermöglichen, wie der Schaltschrank 9, eine Kopplung der Geräte 5 mit einer Steuerungsvorrichtung 8 wie einer SPS. Allerdings können die Verbindungsmodule 4 dezentral und verteilt in der Nähe zu den Geräte 5 vorgesehen sein. Die Verbindungsmodule 4 verschalten somit jeweils die Geräte 5 nur teilweise, wobei die Verbindungsmodule 4 zusammen oder beispielsweise ein und/oder mehrere Verbindungsmodule 4 über jeweils einen und/oder mehrere Hubs 6 die gesamte Verschaltung vornehmen. Um die Konfiguration und/oder Ansteuerung der Verbindungsmodule 4 zentral zu ermöglichen, kann ein Mastermodul 3 mehreren der einzelnen Verbindungsmodulen 4 vorgeschaltet sein. Ebenfalls ist es möglich, dass eine weitere Untergliederung der Verschaltung mittels wenigstens eines Hubs 6 erfolgt.

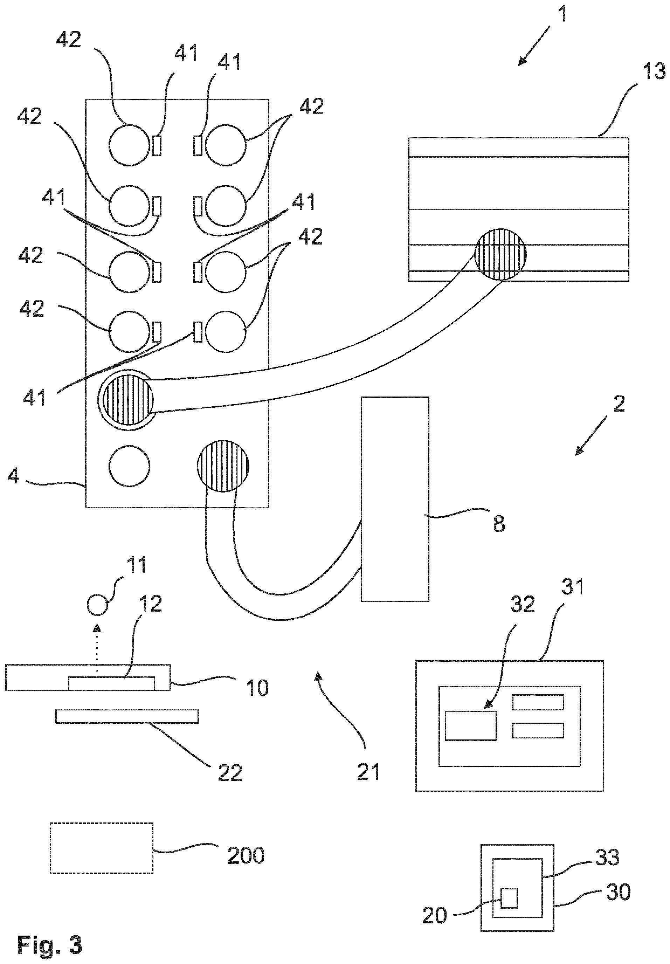

In Fig. 3 sind Teile eines Systems 2 gemäß Ausführungsbeispielen der Erfindung dargestellt, welches für eine computer-gestützte Installation von räumlich dezentral angeordneten elektrischen Verbindungsmodulen 4 einer Maschine 1 vorgesehen sein kann. Das System 2 kann eine Detektionsvorrichtung 22, insbesondere einen Scanner 22 oder eine Kamera 22, für eine Bereitstellung eines Identifikators 11 eines Installationselements 10, vorzugsweise eines Kabels 11 oder eines Bauteils 11, umfassen. Ferner kann das System 2 wenigstens ein elektrisches Verbindungsmodul 4 zur Verbindung mit dem Installationselement 10 und weiteren Installationselementen 10, aufweisen. Ebenfalls kann eine Vorrichtung 30 zur Datenverarbeitung Teil des Systems 2 sein, wobei diese Datenverarbeitungsvorrichtung 30 Mittel zur Ausführung der Schritte eines Verfahren 100 gemäß Ausführungsbeispielen der Erfindung umfassen kann.

Der Identifikator 11 kann in einem dem Installationselement 10 zugeordneten, insbesondere an diesem angeordneten, maschinenlesbaren Code 12 kodiert sein, wobei der maschinenlesbare Code 12 mittels der Detektionsvorrichtung 22 maschinenlesbar ausgeführt ist. Damit ist es für einen Benutzer möglich, mittels der Detektionsvorrichtung 22 den Code 12 einzuscannen und somit den Identifikator 11 an die Datenverarbeitungsvorrichtung 30 zu übertragen.

Ferner können die Verbindungsmodule 4 und wenigstens ein Computer 30, 31 und/oder eine Steuerungsvorrichtung 8 über ein Bussystem 21 jeweils zur bidirektionalen Kommunikation miteinander verbunden sein, wobei die bidirektionale Kommunikation auf Basis eines Kommunikationsprotokolls für ein Feldbussystem vorgesehen sein kann, insbesondere auf Basis eines ProfiNet-, Ethernet/IP- oder 802.3-Standards, und/oder die bidirektionale Kommunikation kabelgebunden über ein Bussystem 21 oder kabellos mittels Bluetooth oder WLAN, auf Basis eines Standards gemäß IEEE 802.11 oder auf Basis eines Mobilfunk-Telekommunikationsstandards vorgesehen sein kann. Um einen Betrieb der Verbindungsmodule 4 zu ermöglichen, kann das Verbindungsmodul 4 ferner mit einer Energieversorgung 13 verbunden sein.

Ferner ist ein Computerprogramm 20 dargestellt, welches Befehle umfasst, die bei der Ausführung des Programms durch einen Computer 30 diesen veranlassen, die Schritte des Verfahrens 100 gemäß Ausführungsbeispielen der Erfindung auszuführen.

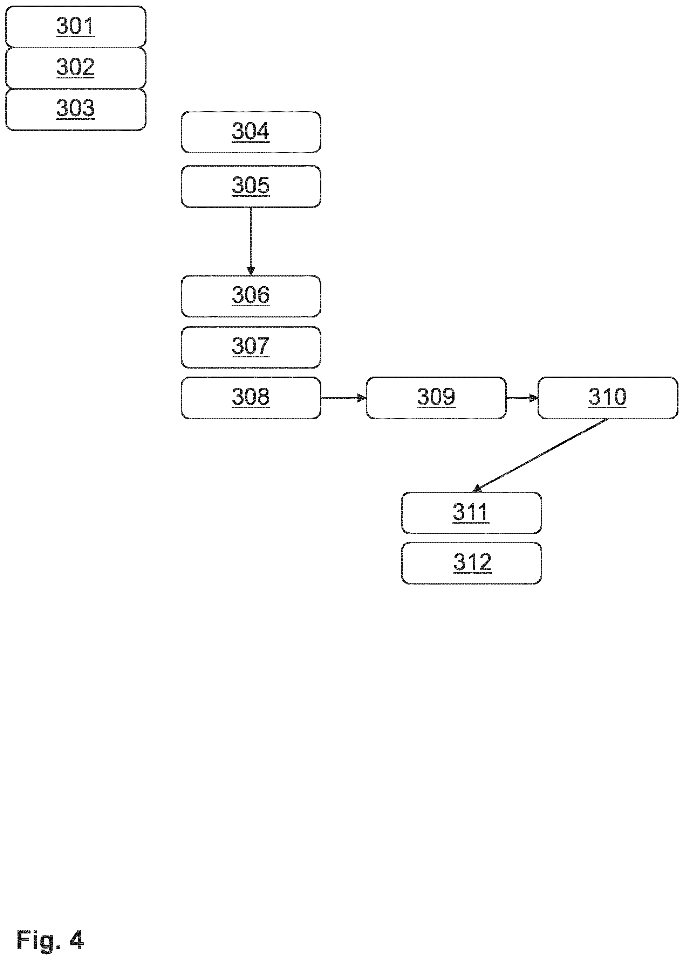

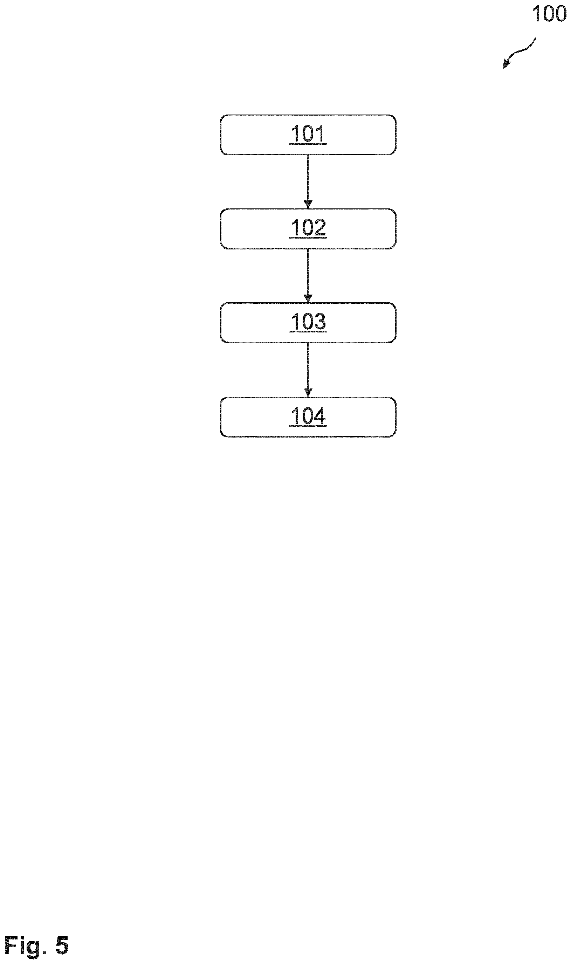

In Fig. 4 und 5 sind Verfahrensschritte des Verfahrens 100 gemäß Ausführungsbeispielen visualisiert. Konkret ist in Fig. 5 ein Verfahren 100 zum Betreiben eines Verbindungsmoduls 4 bei einer computer-gestützten Installation einer Maschine 1 dargestellt. Dabei kann das Verbindungsmodul 4 für eine dezentrale und modulare Verbindung von Komponenten - wie den Installationselementen 10 - der Maschine 1 ausgeführt sein. Es kann gemäß einem ersten Verfahrensschritt 101 ein Bereitstellen einer Installationsfunktion des Verbindungsmoduls 4 für die Installation der Maschine 1 vorgesehen sein, wobei die Installationsfunktion eine Ausgabe einer Installationsinformation für eine Unterstützung einer Herstellung der Verbindung der Komponenten initiiert. Die Ausgabe der Installationsinformation kann dabei eine Initiierung einer optischen Ausgabe umfassen. Anschließend kann gemäß einem zweiten Verfahrensschritt 102 ein Bereitstellen einer Betriebsfunktion des Verbindungsmoduls 4 für einen Betrieb der installierten Maschine 1 vorgesehen sein, wobei die Betriebsfunktion eine elektrische Ausgabe an die verbundenen Komponenten initiiert. Sodann kann gemäß einem dritten Verfahrensschritt 103 ein Installationsmodus bei dem Verbindungsmodul 4 initiiert werden, wobei die Betriebsfunktion deaktiviert, und die Installationsfunktion aktiviert wird. Nach der Herstellung der Verbindung ist es ferner möglich, dass gemäß einem vierten Verfahrensschritt 104 ein Prüfmodus initiiert wird, bei welchem eine Prüffunktion ausgeführt wird, um die ordnungsgemäße Herstellung der Verbindung zu überprüfen.

Das Verfahren 100 kann außerdem wenigstens eine der folgenden Unterstützungsmöglichkeiten bereitstellen:
- Unterstützung des Benutzers bei der Installation, insbesondere Verkabelung, vorzugsweise durch die Installationsfunktion und/oder durch eine Prüffunktion
- Unterstützung des Benutzers bei der Dokumentation der Installation,
- Unterstützung des Benutzers beim Testing/automatisiertes Testing, vorzugsweise die Ausgabe der Installationsinformation,
- Unterstützung des Benutzers bei der Demontage,
- Unterstützung des Engineerings bei der Planung,
- Unterstützung des SPS-Programmierers.

Das Initiieren der optischen Ausgabe kann ein Initiieren einer Aktivierung eines in Fig. 3 dargestellten Anzeigeelements 41 an der elektrischen Komponente 4 umfassen, um im Installationsmodus durch das Anzeigeelement 41 eine Anschlussstelle 42, insbesondere einen Steckplatz 42, für das zu verbindende Installationselement 10 anzuzeigen. Alternativ oder zusätzlich kann das Initiieren der Ausgabe ein Initiieren einer Anzeige einer Anschlussstelle 42, insbesondere eines Steckplatzes 42, des Verbindungsmoduls 4 für das Installationselement 10 auf einer Benutzeroberfläche 32 eines Computers 31 umfassen. Die Benutzeroberfläche 32 kann dabei einen digitalen Zwilling zumindest eines Teils der Maschine 1, und vorzugsweise einen mechanischen und/oder einen elektrischen Aufbau des Teils der Maschine 1 visualisieren. Weitere Alternativen oder zusätzliche Möglichkeiten zur Ausgabe sind eine Anzeige einer Anschlussstelle 42, insbesondere eines Steckplatzes 42, des Verbindungsmoduls 4 für das Installationselement 10 mittels Erweiterter Realität und/oder eine Ausgabe der Installationsanweisung als eine Anweisung für den Benutzer, das Installationselement 10 an eine bestimmte Anschlussstelle 42 des Verbindungsmoduls 4 anzuschließen, wobei vorzugsweise die Anschlussstelle 42 anhand der Installationsvorgabe 200 ermittelt wird. Darüber hinaus kann auch eine akustische Ausgabe der Installationsanweisung vorgesehen sein, sodass ein Benutzer ohne Sicht auf den Computer 31 der Installationsanweisung folgen kann. Hierbei wird z. B. eine Kennung des Verbindungsmoduls 4 und/oder der entsprechende Anschlussstelle 42 sprachlich ausgegeben.

Es ist zudem möglich, dass die Installationsinformation eine Installationskonfiguration und/oder eine Installationsdokumentation umfasst, welche in einem Datenspeicher 33 hinterlegt und/oder an das Verbindungsmodul 4 übertragen wird.

Um Fehler in der Dokumentation zu vermeiden, die beim manuellen Eintragen der Informationen entstehen können, kann eine automatisierte Hinterlegung im System vorteilhaft sein. Dazu werden bspw. in den unterschiedlichen Dokumenten der Installationsvorgabe, wie beispielsweise dem Schaltplan oder dem Anschlussplan, sämtliche Informationen an der richtigen Stelle abgelegt. Die den jeweiligen Schritt ausführende Person muss die Eintragungen dann z. B. nur noch quittieren, z. B. über eine Eingabevorrichtung wie ein Touchscreen und/oder ein elektronisches Kleidungsstück.

Zu den relevanten Informationen, welche die Installationsdokumentation umfassen kann, zählen beispielsweise:
- Welches Bauteil wurde verwendet (eindeutige, vorzugsweise eineindeutige Kennung)?
- An welcher Maschine und an welcher Stelle der Maschine wurde das konkrete Bauteil angebracht?
- Von wem wurde es wann angeschlossen?
- An welchem Port bzw. an welcher Anschlussstelle wurde das Kabel angeschlossen?
- Wie wurde das Kabel angeschlossen?
- Wurde das Bauteil ordnungsgemäß angeschlossen?
- Gab es Abweichungen zum Plan?

Durch die Installationsdokumentation kann z. B. wenigstens einer der folgenden Informationen dokumentiert werden: Arbeitsschritte des Benutzers mit Zusatzinformationen zu den Arbeitsschritten wie eine Bearbeitungsdauer, an welcher Maschine wird gearbeitet, welcher Benutzer, beispielsweise welcher Installateur oder Monteur, hat wann die Tätigkeiten durchgeführt, welches Bauteil ist verdrahtet und/ oder verkabelt worden, ist der Montageschritt abgeschlossen, welcher Port/welche Anschlussstelle wurde verwendet, existieren offene Kabel und was sind die Eigenschaften des offenen Kabels, z.B. Länge, Umgebungsparameter, z.B. Temperatur, Luftfeuchtigkeit, aktueller Projektstand, Schutzklasse, z.B. IP67, auch kann der Benutzer, insbesondere Werker, bei Planabweichungen den Grund der Planabweichung eingeben. Die Installationsdokumentation kann bspw. in einer Datenbank hinterlegt werden. Ein Benutzer kann ggf. mit physischen Handlungen (Tastendruck, Bildschirm, Doppelklick), die Dokumentation auslösen.

Ferner kann eine Auswerteeinheit vorgesehen sein, welche die dokumentierten Informationen, vorzugsweise die Bearbeitungsdauern des Benutzers zu den jeweiligen Arbeitsschritten, auswertet. Hierzu kann auch eine Methode einer künstlichen Intelligenz verwendet werden, welche bspw. die Ergebnisse der Auswerteeinheit optimiert. Die Ergebnisse zeigen dem Benutzer Optimierungspotenziale auf, um zukünftig eine Maschine effizienter zu gestalten, Komponenten oder Baugruppen zu optimieren und Auf- und Abbauabläufe zu verbessern. Ferner werden die Kommentare bei Planabweichungen berücksichtigt.

Dabei ist es auch möglich, dass die Dokumentation mit einem Verbindungsmodul 4 funktioniert, welche nicht vorkonfiguriert oder an einer SPS angeschlossen sind. Dadurch werden Fehler vermieden, die durch die Verwendung äußerlich baugleicher, aber unterschiedlich konfigurierter Verbindungsmodule 4 entstehen können. Durch die Kommunikationsfähigkeit dieser Komponenten und durch die Integration sämtlicher relevanter Informationen kann das System auch dazu verwendet werden, den Benutzer bei der Installation der Automatisierungstechnik anzuleiten. Das systematische Sammeln und Dokumentieren aller relevanten Informationen, beispielsweise die verwendeten Komponenten, die Ausführung von Installations- und Wartungsaufgaben oder eingetretene Problemfälle, führen ferner zu gesichertem Wissen über den gegenwärtigen Systemzustand. Durch das automatisierte Erheben und Zuordnen dieser Informationen wird der Prozess deutlich beschleunigt und menschliche Installateure werden von der Dokumentationsaufgabe entlastet. Durch das automatisierte Erheben und Speichern von zu dokumentierenden Informationen kann das Risiko fehlender und/oder falscher Dokumentationen deutlich reduziert werden.

In Fig. 4 ist ein Verfahren 100 gemäß Ausführungsbeispielen der Erfindung mit weiteren Einzelheiten visualisiert. Über eine in Fig. 3 dargestellte Installationsvorrichtung 31, also einen Computer 31, wie ein Tablet oder Laptop, kann ein Benutzer zunächst eine Nutzeranmeldung 301 durchführen. Hierzu kann der Nutzer eine grafische Benutzeroberfläche 32 nutzen, welche durch den Computer 31 bereitgestellt wird. Ebenfalls über die Benutzeroberfläche 32 kann eine Projektauswahl 302 erfolgen, durch welche bspw. eine Installationsvorgabe 200 für ein gewünschtes Projekt geladen wird. Damit ist es möglich, einen Beginn 303 für eine Anleitung des Benutzers zur Installation der Maschine 1 mittels wenigstens einer Installationsanweisung einzuleiten.

Optional kann nach dem Beginn 303 zunächst eine Darstellung 304 des letzten ausgeführten Schrittes erfolgen, bspw. der letzten Installationsanweisung und/oder einer anderen Anweisung für die Installation. Zunächst kann eine Identifikation 305 eines Installationselements 10 durch den Benutzer erfolgen, wobei der Benutzer hierzu bspw. eine Detektionsvorrichtung 22 wie einen Handscanner zum Scannen eines Identifikationsmittels 12 am Installationselement 10 nutzt. Anhand des gescannten Identifikationsmittels 12 kann dann der Identifikator 11 ermittelt werden und an den Computer 31 und/oder eine Vorrichtung 30 zur Datenverarbeitung übertragen werden. Anhand des empfangenen Identifikators 11 und der Installationsvorgabe 200 kann dann das Verbindungsmodul 4 und die Anschlussstelle 42 identifiziert werden, an welcher das Installationselement 10 angeschlossen werden soll. Hierzu umfasst die Installationsvorgabe 200 bspw. eine Matrix, in welcher verschiedene Installationselemente 10 den Verbindungsmodulen 4 zugeordnet werden. Sodann kann dem Benutzer durch die Installationsanweisung mitgeteilt werden, welches der Verbindungsmodule 4 hierbei identifiziert wurde. Hierzu leuchtet bspw. ein Anzeigeelemente 41 an dem Verbindungsmodul 4 auf. Dies kann durch eine Signalübertragung 306 von der Datenverarbeitungsvorrichtung 30 an das Verbindungsmodul 4 ermöglicht werden. Anschließend kann durch den Benutzer eine Verbindung 307 zwischen dem Installationselement 10 und dem Verbindungsmodul 4 hergestellt werden. Anhand der Installationsvorgabe 200 kann eine Bestätigung 308 der korrekten Montage erfolgen. Anschließend ist ggf. eine zumindest teilweise automatisierte Dokumentation 309 der korrekten Montage und Dokumentation 310 der Erledigung des Arbeitsschritts in der Installationsvorgabe 200 möglich. Dies kann z. B. durch eine Darstellung 311 in einer Maschinenübersicht mit einem grünen Haken oder z.B. durch ein Einblenden der betroffenen Verbindung in einem Elektroschaltplan erfolgen und dem Benutzer über die Benutzeroberfläche 32 dargestellt werden. Anschließend kann erneut eine Identifikation eines Installationselements 312 durchgeführt werden. Durch die Anleitung des Benutzers, insbesondere Werkers, bei der Installation der elektrischen Automatisierungstechnik und durch die automatisierte Prüfung, ob ein geeignetes Bauteil ordnungsgemäß angeschlossen wurde, kann eine fehlerfreie Herstellung des Systems 2 sichergestellt werden.

Danach kann durch den Benutzer eine Verbindung zwischen dem Installationselement und einem Gerät, wie beispielsweise einem Aktor und/oder einem Hub und/oder einem Sensor, hergestellt werden (nicht abgebildet). Anhand der Installationsvorgabe 200 kann eine Bestätigung der korrekten Montage erfolgen. Anschließend ist ggf. eine zumindest teilweise automatisierte Dokumentation der korrekten Montage und Dokumentation der Erledigung des Arbeitsschritts in der Installationsvorgabe 200 möglich. Dies kann z. B. durch eine Darstellung in einer Maschinenübersicht mit einem grünen Haken oder z.B. durch ein Einblenden der betroffenen Verbindung in einem Elektroschaltplan erfolgen und dem Benutzer über die Benutzeroberfläche 32 dargestellt werden. Diese Arbeitsschritte entsprechen prinzipiell den Arbeitsschritten 307 bis 311.

Obwohl einige Aspekte im Zusammenhang mit einer Vorrichtung beschrieben wurden, ist es klar, dass diese Aspekte auch eine Beschreibung des entsprechenden Verfahrens darstellen, wobei ein Element oder eine Vorrichtung einem Verfahrensschritt oder einem Merkmal eines Verfahrensschritts entspricht. Analog dazu stellen Aspekte, die im Zusammenhang mit einem Verfahrensschritt beschrieben werden, auch eine Beschreibung eines entsprechenden Blocks oder Elements oder Merkmals eines entsprechenden Geräts dar.

Ausführungsformen der Erfindung können auf einem Computersystem implementiert werden. Bei dem Computersystem kann es sich um ein lokales Computergerät (z. B. Personalcomputer, Laptop, Tablet-Computer oder Mobiltelefon) mit einem oder mehreren Prozessoren und einem oder mehreren Speichergeräten handeln oder um ein verteiltes Computersystem (z. B. ein Cloud-Computersystem mit einem oder mehreren Prozessoren und einem oder mehreren Speichergeräten, die an verschiedenen Orten verteilt sind, z. B. bei einem lokalen Client und/oder einer oder mehreren entfernten Serverfarmen und/oder Datenzentren). Das Computersystem kann jede beliebige Schaltung oder Kombination von Schaltungen umfassen. In einer Ausführungsform kann das Computersystem einen oder mehrere Prozessoren beliebiger Art umfassen. Der hier verwendete Begriff "Prozessor" kann jede Art von Rechenschaltung bezeichnen, z. B. einen Mikroprozessor, einen Mikrocontroller, einen CISC-Mikroprozessor (Complex Instruction Set Computing), einen RISC-Mikroprozessor (Reduced Instruction Set Computing), einen VLlW-Mikroprozessor (Very Long Instruction Word), einen Grafikprozessor, einen digitalen Signalprozessor (DSP), einen Mehrkernprozessor, ein FPGA (Field Programmable Gate Array) oder jede andere Art von Prozessor oder Verarbeitungsschaltung. Andere Arten von Schaltkreisen, die im Computersystem enthalten sein können, können ein kundenspezifischer Schaltkreis, ein anwendungsspezifischer integrierter Schaltkreis (AsIC) oder ähnliches sein, wie z. B. ein oder mehrere Schaltkreise (z. B. ein Kommunikationsschaltkreis) zur Verwendung in drahtlosen Geräten wie Mobiltelefonen, Tablet-Computern, Laptop-Computern, Zwei-Wege-Funkgeräten und ähnlichen elektronischen Systemen. Das Computersystem kann eine oder mehrere Speichervorrichtungen enthalten, die ein oder mehrere für die jeweilige Anwendung geeignete Speicherelemente umfassen können, wie z. B. einen Hauptspeicher in Form eines Direktzugriffsspeichers (RAM), eine oder mehrere Festplatten und/oder ein oder mehrere Laufwerke, die Wechseldatenträger wie Compact Disks (CD), Flash-Speicherkarten, digitale Videodisks (DVD) und dergleichen verarbeiten. Das Computersystem kann auch ein Anzeigegerät, einen oder mehrere Lautsprecher und eine Tastatur und/oder ein Steuergerät enthalten, das eine Maus, einen Trackball, einen Touchscreen, ein Spracherkennungsgerät oder ein anderes Gerät umfassen kann, das es einem Systembenutzer ermöglicht, Informationen in das Computersystem einzugeben und Informationen von ihm zu empfangen.

Einige oder alle Verfahrensschritte können von einem Hardware-Gerät (oder unter Verwendung eines solchen) ausgeführt werden, wie z. B. einem Prozessor, einem Mikroprozessor, einem programmierbaren Computer oder einer elektronischen Schaltung. In einigen Ausführungsformen können einige oder mehrere der wichtigsten Verfahrensschritte von einem solchen Gerät ausgeführt werden.

Abhängig von bestimmten Implementierungsanforderungen können Ausführungsformen der Erfindung in Hardware oder in Software implementiert werden. Die Implementierung kann unter Verwendung eines nicht-übertragbaren Speichermediums wie eines digitalen Speichermediums, beispielsweise einer Diskette, einer DVD, einer Blu-Ray, einer CD, eines ROM, eines PROM, eines EPROM, eines EEPROM oder eines FLASH-Speichers erfolgen, auf dem elektronisch lesbare Steuersignale gespeichert sind, die mit einem programmierbaren Computersystem zusammenwirken (oder zusammenwirken können), so dass das jeweilige Verfahren durchgeführt wird. Daher kann das digitale Speichermedium computerlesbar sein.

Einige Ausführungsformen der Erfindung umfassen einen Datenträger mit elektronisch lesbaren Steuersignalen, die in der Lage sind, mit einem programmierbaren Computersystem zusammenzuarbeiten, so dass eines der hier beschriebenen Verfahren durchgeführt wird.

Im Allgemeinen können Ausführungsformen der vorliegenden Erfindung als Computerprogrammprodukt mit einem Programmcode implementiert werden, wobei der Programmcode zur Durchführung eines der Verfahren dient, wenn das Computerprogrammprodukt auf einem Computer läuft. Der Programmcode kann zum Beispiel auf einem maschinenlesbaren Träger gespeichert sein.

Andere Ausführungsformen umfassen das Computerprogramm zur Durchführung eines der hier beschriebenen Verfahren, das auf einem maschinenlesbaren Träger gespeichert ist.

Mit anderen Worten, eine Ausführungsform der vorliegenden Erfindung ist daher ein Computerprogramm mit einem Programmcode zur Durchführung eines der hierin beschriebenen Verfahren, wenn das Computerprogramm auf einem Computer läuft.

Eine weitere Ausführungsform der vorliegenden Erfindung ist daher ein Speichermedium (oder ein Datenträger oder ein computerlesbares Medium), auf dem das Computerprogramm zur Durchführung eines der hierin beschriebenen Verfahren gespeichert ist, wenn es von einem Prozessor ausgeführt wird. Der Datenträger, das digitale Speichermedium oder das aufgezeichnete Medium sind typischerweise greifbar und/oder nicht-übertragbar. Eine weitere Ausführungsform der vorliegenden Erfindung ist ein Gerät, wie hierin beschrieben, mit einem Prozessor und dem Speichermedium.

Eine weitere Ausführungsform der Erfindung ist daher ein Datenstrom oder eine Folge von Signalen, die das Computerprogramm zur Durchführung eines der hierin beschriebenen Verfahren darstellen. Der Datenstrom bzw. die Signalfolge kann beispielsweise so ausgestaltet sein, dass er bzw. sie über eine Datenkommunikationsverbindung, z.B. über das Internet, übertragen werden kann.

Eine weitere Ausführungsform umfasst ein Verarbeitungsmittel, z. B. einen Computer oder ein programmierbares Logikgerät, das so konfiguriert oder angepasst ist, dass es eines der hierin beschriebenen Verfahren durchführen kann.

Eine weitere Ausführungsform umfasst einen Computer, auf dem das Computerprogramm zur Durchführung eines der hierin beschriebenen Verfahren installiert ist.

Eine weitere Ausführungsform der Erfindung umfasst eine Vorrichtung oder ein System, die bzw. das so konfiguriert ist, dass sie bzw. es ein Computerprogramm zur Durchführung eines der hierin beschriebenen Verfahren an einen Empfänger überträgt (z. B. auf elektronischem oder optischem Weg). Bei dem Empfänger kann es sich beispielsweise um einen Computer, ein mobiles Gerät, ein Speichergerät oder dergleichen handeln. Die Vorrichtung oder das System kann zum Beispiel einen Dateiserver zur Übertragung des Computerprogramms an den Empfänger umfassen.

In einigen Ausführungsformen kann eine programmierbare Logikvorrichtung (z. B. ein feldprogrammierbares Gate-Array) verwendet werden, um einige oder alle Funktionen der hier beschriebenen Verfahren auszuführen. In einigen Ausführungsformen kann ein feldprogrammierbares Gate-Array mit einem Mikroprozessor zusammenarbeiten, um eines der hier beschriebenen Verfahren durchzuführen. Im Allgemeinen werden die Verfahren vorzugsweise von einem beliebigen Hardware-Gerät durchgeführt.

### Liste der Bezugszeichen

- 1: Maschine, Anlage
- 2: System
- 3: Mastermodul
- 4: Modul, Switch, Komponente, Verbindungsmodul
- 5: Geräte, Sensor, Aktor
- 6: Hub
- 8: Steuerungsvorrichtung, SPS
- 9: Schaltschrank

- 10: Installationselement
- 11: Identifikator
- 12: Identifikationsmittel, maschinenlesbarer Code
- 13: Energieversorgung

- 20: Computerprogramm
- 21: Bussystem
- 22: Detektionsvorrichtung

- 30: Vorrichtung
- 31: Computer
- 32: Benutzeroberfläche
- 33: Datenspeicher

- 41: Anzeigeelement
- 42: Anschlussstelle, Steckplatz

- 100: Verfahren
- 101: erster Verfahrensschritt
- 102: zweiter Verfahrensschritt
- 103: dritter Verfahrensschritt
- 104: vierter Verfahrensschritt
- 200: Installationsvorgabe
- 301: Nutzeranmeldung
- 302: Projektauswahl
- 303: Beginn Anleitung
- 304: Darstellung letzter ausgeführter Schritt
- 305: Identifikation eines Installationselements, insbesondere Kabels
- 306: Signal an Komponente zum Aufleuchten des Anzeigeelements
- 307: Verbindung zwischen Kabel und Modul hergestellt
- 308: Bestätigung korrekte Montage
- 309: Dokumentation korrekte Montage
- 310: Dokumentation Arbeitsschritt erledigt
- 311: Darstellung Maschinenübersicht
- 312: Identifikation eines Installationselements

## Patentansprüche

1. Verfahren (100) zum Betreiben eines Verbindungsmoduls (4) bei einer computer-gestützten Installation einer Maschine (1), wobei das Verbindungsmodul (4) für eine dezentrale und modulare Verbindung von Komponenten der Maschine (1) ausgeführt ist, wobei das Verbindungsmodul (4) ein elektrisches Verbindungsmodul (4) ist, welches es ermöglicht, dezentral die Komponenten der Maschine (1) zu verschalten, wobei das Verfahren (100) die nachfolgenden Schritte umfasst:
Bereitstellen einer Installationsfunktion des Verbindungsmoduls (4) für die Installation der Maschine (1), wobei die Installationsfunktion eine Ausgabe einer Installationsinformation für eine Unterstützung einer Herstellung der Verbindung der Komponenten initiiert;
Bereitstellen einer Betriebsfunktion des Verbindungsmoduls (4) für einen Betrieb der installierten Maschine (1), wobei die Betriebsfunktion eine elektrische Ausgabe an die verbundenen Komponenten initiiert; und
Initiieren eines Installationsmodus bei dem Verbindungsmodul (4), wobei die Betriebsfunktion deaktiviert, und die Installationsfunktion aktiviert wird.

2. Verfahren (100) nach Anspruch 1, wobei das Verbindungsmodul (4) wenigstens ein Anzeigeelement (41) aufweist, um eine Anzeige für die Betriebsfunktion bereitzustellen, wobei das wenigstens eine Anzeigeelement (41) jeweils einer Anschlussstelle (42) des Verbindungsmoduls (4) für die Verbindung mit einer jeweils zu verbindenden Komponente zugeordnet ist, wobei das Verfahren (100) den nachfolgenden Schritt umfasst:
Initiieren einer Aktivierung des Anzeigeelements (41) durch die Installationsfunktion zur Ausgabe der Installationsinformation, um die Anschlussstelle (42) für die jeweils zu verbindende Komponente anzuzeigen.

3. Verfahren (100) nach Anspruch 2, wobei das Initiieren der Aktivierung des Anzeigeelements (41) auf folgende Schritte basiert, um die Ausgabe der Installationsinformation basierend auf einem empfangenen Identifikator (11) und einer Installationsvorgabe (200) zu initiieren:
Bereitstellen der Installationsvorgabe (200), welche eine Zuordnung des Verbindungsmoduls (4) und weiteren räumlich dezentral angeordneten Verbindungsmodulen (4) der Maschine (1) mit den Komponenten spezifiziert;
Empfangen des Identifikators (11) der jeweils zu verbindenden Komponente, wobei die Komponente in der Form eines Installationselements (10) ausgeführt ist; und
Identifizieren (103) der jeweils zu verbindenden Komponente (4) und/oder des zur Verbindung zugeordneten Verbindungsmoduls (4) anhand der bereitgestellten Installationsvorgabe (200).

4. Verfahren (100) nach einem der vorhergehenden Ansprüche, wobei das Verfahren (100) ferner den nachfolgenden Schritt umfasst:
Bereitstellen einer Prüffunktion zur Prüfung der Herstellung der Verbindung und/oder einer Funktion der Komponenten und/oder der Betriebsfunktion und/oder eines Verbindungszustands der Verbindung, wobei die Prüffunktion die elektrische Ausgabe an die jeweils verbundene Komponente initiiert.

5. Verfahren (100) nach einem der vorhergehenden Ansprüche, wobei die Betriebsfunktion die elektrische Ausgabe in der Form einer Ausgabe eines elektrischen Stroms und/oder einer elektrischen Spannung an die Komponenten initiiert, wobei die elektrische Ausgabe an Anschlussstellen (42) des Verbindungsmoduls (4) für die Verbindung der Komponenten vorgesehen ist, um die mit den Anschlussstellen (42) verbundenen Komponenten zu betreiben.

6. Verfahren (100) nach Anspruch 5, wobei die Deaktivierung der Betriebsfunktion durchgeführt wird, um zu verhindern, dass die jeweils zu verbindende Komponente bei der Installation betrieben wird, wobei im Installationsmodus der elektrische Strom und/oder die elektrische Spannung an der jeweiligen Anschlussstelle (42) zumindest reduziert wird.

7. Verfahren (100) nach einem der vorhergehenden Ansprüche, wobei nach einem Abschluss der Installation der Installationsmodus verlassen und ein Betriebsmodus für die Bereitstellung der Betriebsfunktion initiiert wird.

8. Verfahren (100) nach Anspruch 7, wobei das Verbindungsmodul (4) wenigstens ein Anzeigeelement (41) aufweist, um eine Anzeige für die Betriebsfunktion bereitzustellen, wobei das wenigstens eine Anzeigeelement (41) wenigstens einer Anschlussstelle (42) des Verbindungsmoduls (4) zugeordnet ist, wobei im Betriebsmodus das Anzeigeelement (41) in einer anderen Farbe und/oder einer anderen Blinkfrequenz und/oder einer anderen Helligkeit als im Installationsmodus aufleuchtet.

9. Verfahren (100) nach Anspruch 7 oder 8, wobei die elektrische Ausgabe an Anschlussstellen (42) des Verbindungsmoduls (4) für die Verbindung der Komponenten vorgesehen ist, wobei die elektrische Ausgabe an den Anschlussstellen (42) im Betriebsmodus durch eine Steuerungsvorrichtung (8) außerhalb des Verbindungsmoduls (4) definiert wird, und im Installationsmodus durch eine Installationsvorrichtung außerhalb des Verbindungsmoduls (4) und der Steuerungsvorrichtung (8) definiert wird, wobei eine funktionelle Verbindung zu der Steuerungsvorrichtung (8) zur Ansteuerung der Komponenten über die Anschlussstellen (42) im Betriebsmodus aktiv und/oder konfiguriert und im Installationsmodus inaktiv und/oder unkonfiguriert ist.

10. Verfahren (100) nach einem der vorhergehenden Ansprüche, wobei der Installationsmodus durch wenigstens ein Anzeigeelement (41) des Verbindungsmoduls (4) signalisiert wird, um den Installationsmodus vom Betriebsmodus sichtbar anhand des wenigstens einen Anzeigeelements (41) zu unterscheiden.

11. Verfahren (100) nach einem der vorhergehenden Ansprüche, wobei die Komponenten zumindest ein Verbindungselement und/oder ein Kabel und/oder ein Bauteil und/oder einen Aktor und/oder einen Sensor und/oder ein weiteres Verbindungsmodul umfassen.

12. Verfahren (100) nach einem der vorhergehenden Ansprüche, wobei ein Initiieren einer Aktivierung eines Anzeigeelements (41) des Verbindungsmoduls (4) durch die Installationsfunktion zur Ausgabe der Installationsinformation mit einer Ausgabe einer weiteren Installationsinformation in der Form einer Installationsanweisung zur Unterstützung eines Benutzers bei der Installation synchronisiert ist, wobei die Ausgabe der weiteren Installationsinformation zumindest einen der nachfolgenden Schritte umfasst:
Initiieren einer Anzeige einer Anschlussstelle (42), wobei die Benutzeroberfläche (32) einen digitalen Zwilling zumindest eines Teils der Maschine (1) visualisiert, und einen mechanischen und/oder einen elektrischen Aufbau des Teils der Maschine (1) visualisiert;
Initiieren einer Anzeige einer Anschlussstelle (42) der elektrischen Komponente (4) für das Installationselement (10) mittels Erweiterter Realität und/oder mittels eines Kleidungsstücks und/oder mittels einer Detektionsvorrichtung (22) und/oder durch ein optisches und/oder akustisches Signal;
Initiieren einer Ausgabe der Installationsanweisung als eine Anweisung für den Benutzer, das Installationselement (10) an eine bestimmte Anschlussstelle (42) der elektrischen Komponente (4) anzuschließen, wobei die Anschlussstelle (42) anhand der Installationsvorgabe (200) ermittelt wird;
Initiieren einer akustischen Ausgabe der Installationsanweisung.

13. Verbindungsmodul (4) für eine dezentrale und modulare Verbindung von Komponenten einer Maschine (1), wobei das Verbindungsmodul (4) zur Ausführung der Schritte des Verfahrens (100) nach einem der vorhergehenden Ansprüche ausgebildet ist.

14. Computerprogramm (20), umfassend Befehle, die bei der Ausführung des Programms durch einen Computer (30) diesen veranlassen, die Schritte des Verfahrens (100) nach einem der Ansprüche 1 bis 12 auszuführen.

15. Vorrichtung (30) zur Datenverarbeitung, umfassend Mittel zur Ausführung der Schritte des Verfahrens (100) nach einem der Ansprüche 1 bis 12.

## Claims

1. A method (100) for operating a connection module (4) in a computer-aided installation of a machine (1), wherein the connection module (4) is designed for a decentralized and modular connection of components of the machine (1), wherein the connection module (4) is an electrical connection module (4) which enables the components of the machine (1) to be connected decentrally, the method (100) comprising the following steps:
Providing an installation function of the connection module (4) for installing the machine (1), wherein the installation function initiates an output of an installation information for assisting an establishment of the connection of the components;
Providing an operating function of the connection module (4) for an operation of the installed machine (1), the operating function initiating an electrical output to the connected components; and
Initiating an installation mode on the connection module (4), whereby the operating function is deactivated and the installation function is activated.

2. The method (100) according to claim 1, wherein the connection module (4) has at least one display element (41) in order to provide a display for the operating function, wherein the at least one display element (41) is in each case assigned to a connection point (42) of the connection module (4) for the connection to a respective component to be connected, wherein the method (100) comprises the following step:
Initiating an activation of the display element (41) by the installation function to output the installation information to display the connection point (42) for the respective component to be connected.

3. The method (100) according to claim 2, wherein initiating the activation of the display element (41) is based on the following steps to initiate the output of the installation information based on a received identifier (11) and an installation specification (200):
Providing the installation specification (200), which specifies an assignment of the connection module (4) and further spatially decentralized connection modules (4) of the machine (1) with the components;
Receiving the identifier (11) of the respective component to be connected, the component being in the form of an installation element (10); and
Identifying (103) the component (4) to be connected in each case and/or the connection module (4) assigned to the connection on the basis of the installation specification (200) provided.

4. The method (100) according to any one of the preceding claims, wherein the method (100) further comprises the following step:
Providing a test function for testing the establishment of the connection and/or a function of the components and/or the operating function and/or a connection state of the connection, wherein the test function initiates the electrical output to the respective connected component.

5. The method (100) according to one of the preceding claims, wherein the operating function initiates the electrical output in the form of an output of an electrical current and/or an electrical voltage to the components, wherein the electrical output is provided at connection points (42) of the connection module (4) for connecting the components in order to operate the components connected to the connection points (42).

6. The method (100) according to claim 5, wherein the deactivation of the operating function is performed in order to prevent the respective component to be connected from being operated during installation, wherein in the installation mode the electrical current and/or the electrical voltage at the respective connection point (42) is at least reduced.

7. The method (100) according to one of the preceding claims, wherein after a completion of the installation, the installation mode is exited and an operation mode for providing the operating function is initiated.

8. The method (100) according to claim 7, wherein the connection module (4) has at least one display element (41) in order to provide a display for the operating function, wherein the at least one display element (41) is assigned to at least one connection point (42) of the connection module (4), wherein in the operating mode the display element (41) lights up in a different color and/or a different flashing frequency and/or a different brightness than in the installation mode.

9. The method (100) according to claim 7 or 8, wherein the electrical output is provided at connection points (42) of the connection module (4) for the connection of the components, wherein the electrical output at the connection points (42) is defined in operation mode by a control device (8) outside the connection module (4), and in installation mode is defined by an installation device outside the connection module (4) and the control device (8), wherein a functional connection to the control device (8) for controlling the components via the connection points (42) is active and/or configured in operating mode and inactive and/or unconfigured in installation mode.

10. The method (100) according to one of the preceding claims, wherein the installation mode is signaled by at least one display element (41) of the connection module (4) in order to visibly distinguish the installation mode from the operation mode by means of the at least one display element (41).

11. The method (100) according to one of the preceding claims, wherein the components comprise at least one connecting element and/or a cable and/or a component and/or an actuator and/or a sensor and/or a further connection module.

12. The method (100) according to one of the preceding claims, wherein an initiation of an activation of a display element (41) of the connection module (4) by the installation function for outputting the installation information is synchronized with an output of a further installation information in the form of an installation instruction for assisting a user in the installation, wherein the output of the further installation information comprises at least one of the following steps:
Initiating a display of a connection point (42), wherein the user interface (32) visualizes a digital twin of at least a part of the machine (1), and visualizes a mechanical and/or an electrical structure of the part of the machine (1);
Initiating an indication of a connection point (42) of the electrical component (4) for the installation element (10) by means of augmented reality and/or by means of a garment and/or by means of a detection device (22) and/or by means of an optical and/or acoustic signal;
Initiating an output of the installation instruction as an instruction for the user to connect the installation element (10) to a specific connection point (42) of the electrical component (4), wherein the connection point (42) is determined on the basis of the installation specification (200);
Initiating an acoustic output of the installation instructions.

13. A connection module (4) for a decentralized and modular connection of components of a machine (1) , wherein the connection module (4) is designed to carry out the steps of the method (100) according to any one of the preceding claims.

14. A computer program (20) , comprising instructions which, when the program is executed by a computer (30), cause the computer to perform the steps of the method (100) according to any one of claims 1 to 12.

15. A device (30) for data processing , comprising means for carrying out the steps of the method (100) according to any one of claims 1 to 12.

## Revendications

1. Procédé (100) de fonctionnement d'un module de connexion (4) lors d'une installation assistée par ordinateur d'une machine (1), le module de connexion (4) étant conçu pour une connexion décentralisée et modulaire de composants de la machine (1), le module de connexion (4) étant un module de connexion électrique (4) qui permet de connecter de manière décentralisée les composants de la machine (1), le procédé (100) comprenant les étapes suivantes :
Mise à disposition d'une fonction d'installation du module de connexion (4) pour l'installation de la machine (1), la fonction d'installation initiant une sortie d'informations d'installation pour aider à l'établissement de la connexion des composants ;
Mise à disposition d'une fonction de fonctionnement du module de connexion (4) pour un fonctionnement de la machine installée (1), la fonction de fonctionnement initiant une sortie électrique vers les composants connectés ; et
Initiation d'un mode d'installation au niveau du module de connexion (4), dans lequel la fonction de fonctionnement est désactivée et la fonction d'installation est activée.

2. Procédé (100) selon la revendication 1, dans lequel le module de connexion (4) comprend au moins un élément d'affichage (41) pour fournir une indication de la fonction de fonctionnement, ledit au moins un élément d'affichage (41) étant associé respectivement à un emplacement de connexion (42) du module de connexion (4) pour la connexion à un composant respectif à connecter, le procédé (100) comprenant l'étape suivante :
Initiation d'une activation de l'élément d'affichage (41) par la fonction d'installation pour émettre les informations d'installation afin d'afficher le point de connexion (42) pour le composant respectif à connecter.

3. Procédé (100) selon la revendication 2, dans lequel l'initiation de l'activation de l'élément d'affichage (41) est basée sur les étapes suivantes pour initier la sortie des informations d'installation sur la base d'un identificateur reçu (11) et d'une consigne d'installation (200) :
Mise à disposition de la consigne d'installation (200), qui spécifie une association du module de connexion (4) et d'autres modules de connexion (4) de la machine (1) disposés de manière décentralisée dans l'espace avec les composants ;
Réception de l'identificateur (11) du composant à connecter, le composant étant réalisé sous la forme d'un élément d'installation (10) ; et l'identification (103) du composant à connecter (4) et/ou du module de connexion (4) associé à la connexion à l'aide de la consigne d'installation (200) mise à disposition.

4. Procédé (100) selon l'une des revendications précédentes, le procédé (100) comprenant en outre l'étape suivante :
Mise à disposition d'une fonction de test pour tester l'établissement de la connexion et/ou une fonction des composants et/ou la fonction de fonctionnement et/ou un état de connexion de la connexion, la fonction de test initiant la sortie électrique vers le composant connecté respectif.

5. Procédé (100) selon l'une des revendications précédentes, dans lequel la fonction de fonctionnement initie la sortie électrique sous la forme d'une sortie d'un courant électrique et/ou d'une tension électrique vers les composants, la sortie électrique étant prévue au niveau de points de connexion (42) du module de connexion (4) pour la connexion des composants afin de faire fonctionner les composants connectés aux points de connexion (42).

6. Procédé (100) selon la revendication 5, dans lequel la désactivation de la fonction de fonctionnement est effectuée pour empêcher le composant à connecter respectif d'être actionné lors de l'installation, dans lequel, en mode installation, le courant électrique et/ou la tension électrique au niveau du point de connexion respectif (42) est au moins réduit.

7. Procédé (100) selon l'une des revendications précédentes, dans lequel, une fois l'installation terminée, le mode d'installation est quitté et un mode de fonctionnement est initié pour mettre à disposition la fonction de fonctionnement.

8. Procédé (100) selon la revendication 7, dans lequel le module de connexion (4) comprend au moins un élément d'affichage (41) pour fournir une indication de la fonction de fonctionnement, ledit au moins un élément d'affichage (41) étant associé à au moins un point de connexion (42) du module de connexion (4), dans lequel, en mode de fonctionnement, l'élément d'affichage (41) s'allume dans une couleur et/ou une fréquence de clignotement et/ou une luminosité différentes de celles du mode d'installation.

9. Procédé (100) selon la revendication 7 ou 8, dans lequel la sortie électrique est prévue à des points de connexion (42) du module de connexion (4) pour la connexion des composants, la sortie électrique aux points de connexion (42) étant définie en mode de fonctionnement par un dispositif de commande (8) externe au module de connexion (4), et étant définie en mode d'installation par un dispositif d'installation extérieur au module de connexion (4) et au dispositif de commande (8), une connexion fonctionnelle avec le dispositif de commande (8) pour la commande des composants par l'intermédiaire des points de connexion (42) étant active et/ou configurée en mode de fonctionnement et inactive et/ou non configurée en mode d'installation.

10. Procédé (100) selon l'une des revendications précédentes, dans lequel le mode d'installation est signalé par au moins un élément d'affichage (41) du module de connexion (4), afin de distinguer visuellement le mode d'installation du mode de fonctionnement à l'aide dudit au moins un élément d'affichage (41).

11. Procédé (100) selon l'une des revendications précédentes, dans lequel les composants comprennent au moins un élément de connexion et/ou un câble et/ou un composant et/ou un actionneur et/ou un capteur et/ou un autre module de connexion.

12. Procédé (100) selon l'une des revendications précédentes, dans lequel une initiation d'une activation d'un élément d'affichage (41) du module de connexion (4) par la fonction d'installation pour émettre l'information d'installation est synchronisée avec une émission d'une autre information d'installation sous la forme d'une instruction d'installation pour aider un utilisateur dans l'installation, dans lequel l'émission de l'autre information d'installation comprend au moins l'une des étapes suivantes :
Initiation d'un affichage d'un point de connexion (42), l'interface utilisateur (32) visualisant un jumeau numérique d'au moins une partie de la machine (1), et visualisant une structure mécanique et/ou électrique de la partie de la machine (1) ;
Initiation d'un affichage d'un point de connexion (42) du composant électrique (4) pour l'élément d'installation (10) au moyen de la réalité augmentée et/ou au moyen d'un vêtement et/ou au moyen d'un dispositif de détection (22) et/ou par un signal optique et/ou acoustique ;
Initiation d'une sortie de l'instruction d'installation en tant qu'instruction pour l'utilisateur de connecter l'élément d'installation (10) à un point de connexion (42) particulier du composant électrique (4), le point de connexion (42) étant déterminé à l'aide de la consigne d'installation (200) ;
Initiation d'une sortie sonore de l'instruction d'installation.

13. Module de connexion (4) pour une connexion décentralisée et modulaire de composants d'une machine (1), le module de connexion (4) étant configuré pour réaliser les étapes du procédé (100) selon l'une des revendications précédentes.

14. Programme informatique (20) comprenant des instructions qui, lorsque le programme est exécuté par un ordinateur (30), amènent ce dernier à exécuter les étapes du procédé (100) selon l'une des revendications 1 à 12.

15. Dispositif (30) de traitement de données comprenant des moyens pour mettre en oeuvre les étapes du procédé (100) selon l'une des revendications 1 à 12.
